(19)

**Europäisches Patentamt**
**European Patent Office**
**Office européen des brevets**

(11)     **EP 4 439 689 B1**

(12)                          **EUROPEAN PATENT SPECIFICATION**

(45) Date of publication and mention
     of the grant of the patent:
     **12.11.2025 Bulletin 2025/46**

(51) International Patent Classification (IPC):
     **H01M 4/04** (2006.01)          **H01M 4/139** (2010.01)

(52) Cooperative Patent Classification (CPC):
     **H01M 4/139; H01M 4/0404;** Y02E 60/10

(21) Application number: **24161571.5**

(22) Date of filing: **05.03.2024**

(54) **METHOD OF PREPARING DRY ELECTRODE**

     VERFAHREN ZUR HERSTELLUNG EINER TROCKENEN ELEKTRODE

     PROCÉDÉ DE PRÉPARATION D'ÉLECTRODE SÈCHE

(84) Designated Contracting States:
     **AL AT BE BG CH CY CZ DE DK EE ES FI FR GB**
     **GR HR HU IE IS IT LI LT LU LV MC ME MK MT NL**
     **NO PL PT RO RS SE SI SK SM TR**

(30) Priority: **08.03.2023 KR 20230030817**

(43) Date of publication of application:
     **02.10.2024 Bulletin 2024/40**

(73) Proprietor: **Samsung SDI Co., Ltd.**
     **Yongin-si, Gyeonggi-do 17084 (KR)**

(72) Inventors:
     • **YOON, Yeonhee**
       **17084 Yongin-si (KR)**
     • **LEE, Jinhyon**
       **17084 Yongin-si (KR)**

     • **NAM, Hyun**
       **17084 Yongin-si (KR)**
     • **PYUN, Ahram**
       **17084 Yongin-si (KR)**
     • **KWON, Ilkyong**
       **17084 Yongin-si (KR)**
     • **LEE, Donggeun**
       **17084 Yongin-si (KR)**
     • **KIM, Seongdae**
       **17084 Yongin-si (KR)**

(74) Representative: **Marks & Clerk LLP**
     **15 Fetter Lane**
     **London EC4A 1BW (GB)**

(56) References cited:
     **EP-A1- 3 518 323          EP-A1- 4 024 498**
     **WO-A1-2022/092679**

**Description**

**BACKGROUND**

**1. Field**

One or more embodiments of the present disclosure relate to a method of preparing a dry electrode.

**2. Description of the Related Art**

In order to meet the trend toward miniaturization and high performance of one or more suitable devices, high energy density in addition to miniaturization and weight reduction of lithium batteries is becoming important. For example, high-capacity lithium batteries are becoming important and desirable.

In order to implement lithium batteries suitable for such utilization, electrodes having relatively high loadings (e.g., high active material loadings (e.g., to have high energy capacity)) are being actively investigated.

In a process of preparing an electrode having a high loading, due to an increase in thickness and/or the like of an electrode active material layer, the possibility of defects such as collapse of the electrode active material layer increases during a process of introducing the electrode active material layer onto an electrode current collector.

There is thus a need or desire for a method of easily introducing an electrode active material layer having a high loading onto an electrode current collector.

**SUMMARY**

One or more aspects of embodiments of the present disclosure are directed toward a method of preparing a dry electrode (e.g., a dry electrode of a rechargeable lithium battery), which is capable of introducing an electrode active material layer having one or more suitable forms onto an electrode current collector without damage to the electrode current collector.

One or more aspects of embodiments of the present disclosure are directed toward a method of preparing a dry electrode, which is capable of easily adjusting a position of an electrode active material layer introduced onto an electrode current collector.

One or more aspects of embodiments the present disclosure are directed toward a method of preparing a dry electrode, which is capable of easily preventing or reducing an electrode active material layer from being separated from an electrode current collector.

Additional aspects will be set forth in part in the description which follows and, in part, will be apparent from the description, or may be learned by practice of the presented embodiments of the disclosure.

According to one or more embodiments of the present disclosure, provided is a method of preparing a dry electrode, the method including arranging at least one interlayer on at least one surface (e.g., on one surface or two opposite surfaces) of an electrode current collector to prepare a first stack, arranging a dry electrode film, which has an area larger than an area of the at least one interlayer (e.g. in a plan view, such as a view in a stacking direction of the dry electrode), on the first stack to prepare a second stack, wherein the dry electrode film includes a first region on the at least one interlayer and a second region extending from the first region beyond an outer periphery of the at least one interlayer, and pulling at least a portion of the second region of the dry electrode film to separate the second region from the first region and provide a dry electrode, wherein the dry electrode film has anisotropic tensile strength, and wherein the dry electrode includes a dry electrode active material layer on the at least one interlayer, and the dry electrode active material layer directly on the electrode current collector in the dry electrode is absent (e.g., the dry electrode active material layer does not directly contact the electrode current collector in the dry electrode).

According to one or more embodiments of the present disclosure, provided is a method of preparing a dry electrode, the method including arranging at least one interlayer on at least one surface (e.g., on one surface or two opposite surfaces) of an electrode current collector to prepare a first stack, arranging a dry electrode film, which has an area larger than an area of the at least one interlayer (e.g. in a plan view, such as a view in a stacking direction of the dry electrode), on the first stack to prepare a second stack, wherein the dry electrode film includes a first region on the at least one interlayer and a second region extending from the first region beyond an outer periphery of the at least one interlayer, and pulling at least a portion of the second region of the dry electrode film to separate the second region from the first region and provide a dry electrode, wherein the dry electrode film has anisotropic tensile strength.

According to one or more embodiments of the present disclosure, a dry electrode includes an electrode current collector, an interlayer on at least one surface (e.g., on one surface or two opposite surfaces) of the electrode current collector, and a dry electrode active material layer on the interlayer, wherein an area of the interlayer is smaller than an area of the electrode current collector (e.g. in a plan view, such as a view in a stacking direction of the dry electrode), the dry electrode active material layer directly on the electrode current collector is absent, the dry electrode active material layer has anisotropic tensile strength, and one surface of the electrode current collector, which is adjacent to one side surface of the dry electrode active material layer and is not covered by the interlayer, is free of burrs and/or depressions (e.g., does not include any (or any substantial) burrs and/or depressions).

According to one or more embodiments of the present disclosure, a lithium battery includes a positive electrode, a negative electrode, and an electrolyte between the positive electrode and the negative electrode, wherein at least one of the positive electrode or the negative electrode includes the above-described dry electrode.

At least some of the above and other features of the invention are set out in the claims.

## BRIEF DESCRIPTION OF THE DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the disclosure will be more apparent from the following description taken in conjunction with the accompanying drawings, in which:

FIGs. 1A and 1B are cross-sectional views each being of a first assembly according to one or more embodiments of the present disclosure;

FIGs. 2A and 2B are cross-sectional views each being of a second assembly according to one or more embodiments of the present disclosure;

FIGs. 3A and 3B are cross-sectional views each being of a dry electrode according to one or more embodiments of the present disclosure;

FIG. 4A is a perspective view of a first assembly according to one or more embodiments of the present disclosure;

FIG. 4B is a perspective view of a second assembly according to one or more embodiments of the present disclosure;

FIG. 4C is a perspective view of a second assembly according to one or more embodiments of the present disclosure;

FIG. 4D is a perspective view of a dry electrode according to one or more embodiments of the present disclosure;

FIG. 4E is a perspective view of a second assembly according to one or more embodiments of the present disclosure;

FIG. 4F is a perspective view of a second assembly according to one or more embodiments of the present disclosure;

FIGs. 5A - 5E are plan views each being of a dry electrode according to one or more embodiments of the present disclosure;

FIGs. 6A - 6Q are plan views each being of arranged patterns of a dry electrode according to one or more embodiments of the present disclosure;

FIG. 7 is a scanning electron microscope image of a cross section of a dry positive electrode active material layer prepared in Example 1;

FIG. 8 is a schematic view of a lithium battery according to one or more embodiments of the present disclosure;

FIG. 9 is a schematic view of a lithium battery according to one or more embodiments of the present disclosure; and

FIG. 10 is a schematic view of a lithium battery according to one or more embodiments of the present disclosure.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the terms "and/or" and "or" may include any and all combinations of one or more of the associated listed items. Expressions such as "at least one of," "one of," and "at least one selected from," when preceding a list of elements, modify the entire list of elements and do not modify the individual elements of the list. For example, "at least one of a, b, or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof.

Hereinafter, as the present disclosure allows for one or more suitable changes and numerous embodiments, example embodiments will be illustrated in the drawings and described in more detail in the written description. However, this is not intended to limit the present disclosure to particular modes of practice, and it is to be appreciated that all changes, equivalents, and substitutes that do not depart from the technical scope are encompassed in the present disclosure.

The terms utilized herein are merely utilized to describe example embodiments and are not intended to limit the present disclosure. An expression utilized in the singular encompasses the expression of the plural, unless it has a clearly different meaning in the context. As utilized herein, it is to be understood that the terms such as "including," "having," and "comprising" are intended to indicate the existence of the features, numbers, steps, actions, components, parts, ingredients, materials, or combinations thereof disclosed in the disclosure and are not intended to preclude the possibility that one or more other features, numbers, steps, actions, components, parts, ingredients, materials, or combinations thereof may exist or may be added. The symbol "/"utilized herein may be interpreted as "and" or "or" according to the context.

In the drawings, the thicknesses of layers and regions may be exaggerated or reduced for clarity. Like reference numerals in the drawings denote like elements throughout the present disclosure, and duplicative descriptions thereof may not be provided. Throughout the disclosure, it will be understood that if a component, such as a layer, a film, a region, or a plate, is referred to as being "on" another component, the component may be directly on the other component or intervening components may be present thereon. The term "directly on" may refer to that there are no additional layers, films, regions, plates, etc., between a layer, a film, a region, a plate, etc. and the other part. Throughout the present disclosure, while such terms as "first," "second," and/or the like may be utilized to describe one or more suitable components, such components should not be limited to the terms. The terms are utilized only to distinguish one component from another. Components having substantially the same functional configuration in the present disclosure and drawings are denoted by the same reference numerals, and redundant descriptions thereof will not be provided for conciseness.

The term "particle diameter" of particles as utilized herein may refer to an average diameter if (e.g., when) particles are spherical and refers to an average major axis length if (e.g., when) particles are non-spherical. A particle diameter of particles may be measured utilizing a particle size analyzer (PSA). A "particle diameter" of particles is, for example, an average particle diameter. An "average particle diameter" may refer to, for example, a median particle diameter (D50). The median particle diameter (D50) is a particle size corresponding to a 50% cumulative volume when a particle size distribution measured through a laser diffraction method is calculated from particles having a smaller particle size to particles having a larger particle size.

The term "metal" as utilized herein may include all of metals and metalloids such as silicon and germanium in an elemental or ionic state.

The term "alloy" as utilized herein may refer to a mixture of two or more metals.

The term "positive electrode active material" as utilized herein may refer to a positive electrode material that may undergo lithiation and delithiation.

The term "negative electrode active material" as utilized herein may refer to a negative electrode material that may undergo lithiation and delithiation.

The terms "lithiate" and "lithiating" as utilized herein may refer to a process of adding lithium to a positive electrode active material or a negative electrode active material.

The terms "delithiate" and "delithiating" as utilized herein may refer to a process of removing lithium from a positive electrode active material or a negative electrode active material.

The terms "charge" and "charging" as utilized herein may refer to a process of providing electrochemical energy to a battery.

The terms "discharge" and "discharging" as utilized herein may refer to a process of removing electrochemical energy from a battery.

The terms "positive electrode" and "cathode" as utilized herein may refer to an electrode at which electrochemical reduction and lithiation occur during a discharging process.

The terms "negative electrode" and "anode" as utilized herein may refer to an electrode at which electrochemical oxidation and delithiation occur during a discharging process.

An electrode film having "anisotropic tensile strength" as utilized herein may refer to an electrode film of which tensile strength varies in tensioning directions.

An electrode film having "isotropic tensile strength" may refer to an electrode film having substantially the same tensile strength in tensioning directions.

A tensile strength in a particular direction may be measured by stretching a sample at a speed of 5 mm/min in the particular direction until fracture utilizing a texture analyzer (e.g. TA.XT plus manufactured by Stable Micro Systems), and measuring the largest stress applied at fracture in a stress-strain curve.

Hereinafter, a method of preparing a dry electrode according to one or more embodiments will be described in more detail.

A method of preparing a dry electrode (e.g., a dry electrode of a rechargeable lithium battery) according to one or more embodiments may include arranging at least one interlayer on at least one surface (e.g., one surface or two opposite surfaces) of an electrode current collector to prepare a first stack, arranging a dry electrode film, which has an area larger than an area of the interlayer (e.g. in a plan view, such as a view in a stacking direction of the dry electrode), on the first stack to prepare a second stack, wherein the dry electrode film includes a first region on the interlayer and a second region extending from the first region beyond an outer periphery of the interlayer, and pulling at least a portion of the second region of the dry electrode film to separate the second region from the first region and provide a dry electrode, wherein the dry electrode film has anisotropic tensile strength, and wherein the dry electrode includes a dry electrode active material layer on the interlayer, and the dry electrode active material layer directly on the electrode current collector in the dry electrode is absent (e.g., the dry electrode active material layer is not directly in contact with (e.g., does not directly contact) the electrode current collector in the dry electrode).

In the dry electrode film having anisotropic tensile strength, a portion of the dry electrode film may be separated in a direction perpendicular to a direction in which the dry electrode film has low tensile strength, thereby easily separating a portion of the dry electrode film from the rest of the dry electrode film. For example, the dry electrode film may have a tensile strength in a first direction and a tensile strength in a second direction perpendicular to the first direction, wherein the tensile strength in the first direction is higher than the tensile strength in the second direction. At one end portion of the dry electrode film, a portion of the second region of the dry electrode film may be turned over at an angle of about 180 degrees and pulled in the first direction perpendicular to the second direction so that the second region may be easily and selectively separated from the first region in the first direction. The second region of the dry electrode film described above may be easily separated from the first region of the dry electrode film without damage in the electrode current collector. Accordingly, it may be possible to easily adjust the shape and position of the dry electrode active material layer disposed on the interlayer. In some embodiments, because the interlayer is disposed between the electrode current collector and the dry electrode active material layer, and the dry electrode active material layer directly disposed on the electrode current collector is absent, it may prevent or reduce the dry electrode active material layer from being separated from the electrode current collector. In some embodiments, in an electrode film having isotropic tensile strength, tensile strength in the first direction may be similar to or substantially the same as tensile strength in the second direction. Thus, even though, at one end portion of the dry electrode film, a portion of a second region of the dry electrode film may be turned over at an angle of about 180 degrees and pulled in the first direction perpendicular to the second direction, the second region of the electrode film may not be separated in the first direction and may be separated without directionality. Thus, it is difficult to selectively separate the second region of the electrode film from the first region of the electrode film. Accordingly, it is difficult to adjust the shape and position of a dry electrode active material layer disposed on the interlayer.

A method of preparing a dry electrode according to one or more embodiments will be described in more detail with reference to the accompanying drawings.

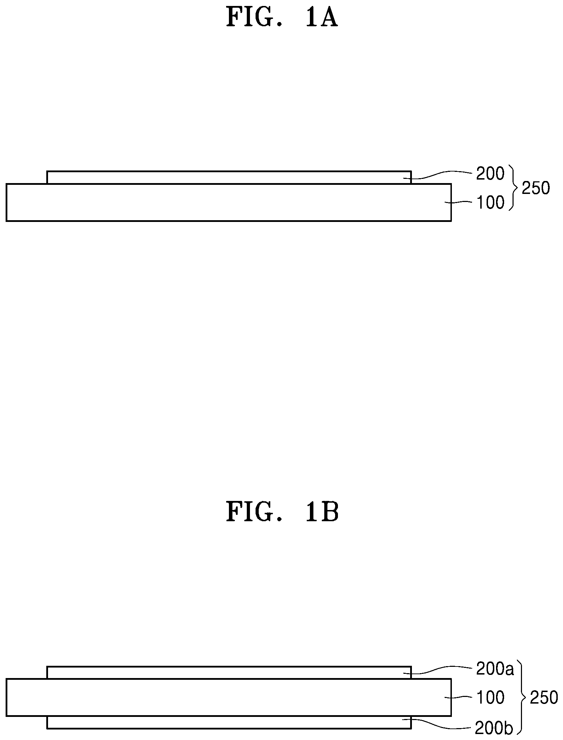

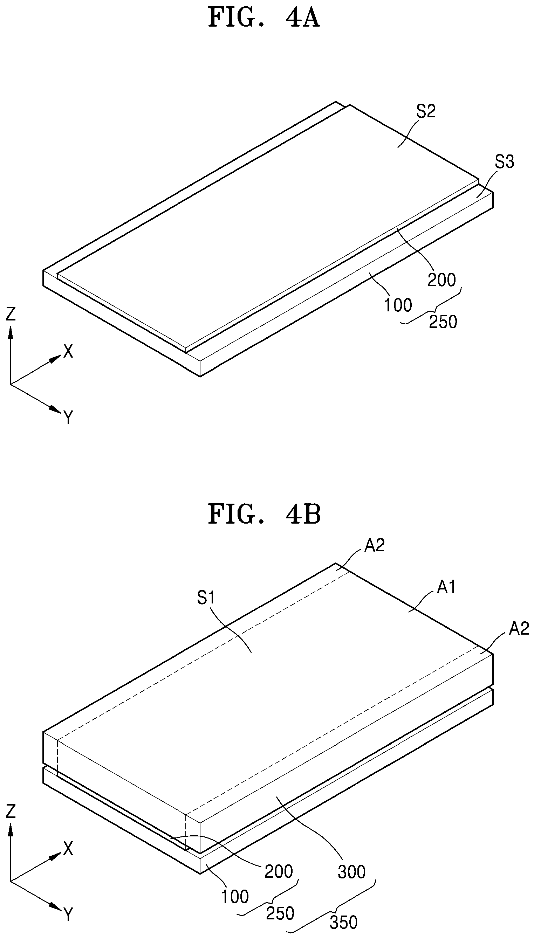

Referring to FIGs. 1A, 1B, and 4A, at least one interlayer 200 (200a and/or 200b) may be disposed on at least one surface (e.g., one surface or two opposite surfaces of) an electrode current collector 100 to prepare a first stack 250 (i.e., a first assembly). In some embodiments, the interlayer 200 (200a and/or 200b) may be disposed on one surface of the electrode current collector 100 or may be disposed on each of the two opposite surfaces of the electrode current collector 100. In some embodiments, the interlayer 200 (200a and/or 200b) may be disposed on a portion or the entirety of one surface or each of the two opposite surfaces of the electrode current collector 100. In some embodiments, the interlayer 200 (200a and/or 200b) may be disposed on one surface of the electrode current collector 100 to cover a partial or entire surface of the electrode current collector 100. In some embodiments, the interlayer 200 (200a and/or 200b) may be disposed on each of the two opposite surfaces of the electrode current collector 100 to cover a partial or entire surface (of the one surface or each of the surfaces) of the electrode current collector 100.

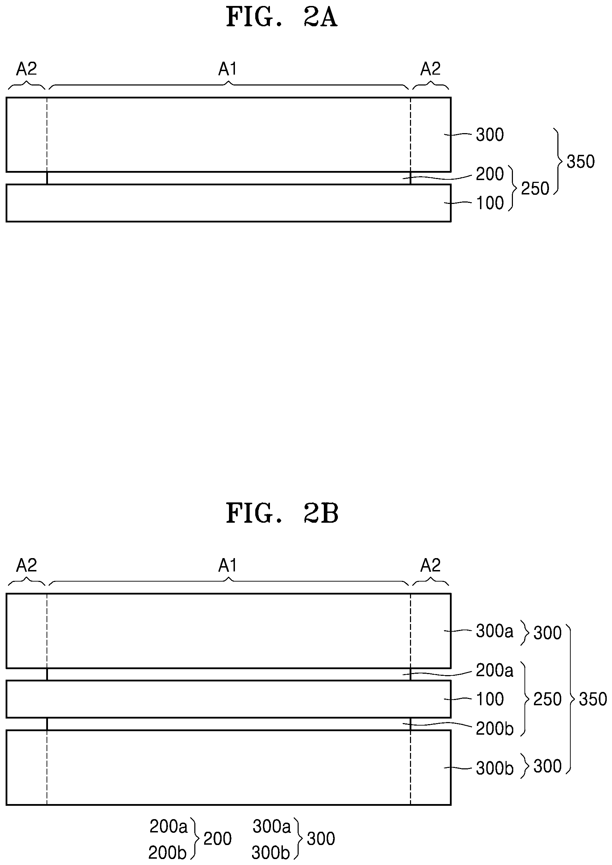

Referring to FIGs. 2A, 2B, and 4B, next, a dry electrode film 300 (300a and/or 300b) having a larger area than the interlayer 200 (200a and/or 200b) (e.g. in a plan view, such as a view in a stacking direction of the dry electrode) may be disposed on the first stack 250 to prepare a second stack 350 (i.e., a second assembly). The dry electrode film 300 (300a and/or 300b) may include a first region A1 disposed on the interlayer 200 (200a and/or 200b) and a second region A2 extending from the first region A1 beyond an outer periphery of the interlayer 200 (200a and/or 200b). The second region A2 of the dry electrode film 300 (300a and/or 300b) may be, for example, a region in which the interlayer 200 (200a and/or 200b) is absent between the dry electrode film 300 (300a and/or 300b) and the electrode current collector 100. The second region A2 of the dry electrode film 300 (300a and/or 300b) may be, for example, a region of the dry electrode film 300 (300a and/or 300b) which is not in contact with the interlayer 200 (200a and/or 200b). After the dry electrode film 300 (300a and/or 300b) having a larger area than that of the interlayers 200 (200a and 200b) (e.g. in a plan view, such as a view in a stacking direction of the dry electrode) is disposed on the first stack 250, a second stack 350 may be prepared, for example, through rolling. The dry electrode film 300 (300a and/or 300b) may be disposed on one surface or two opposite surfaces of the first stack 250 and rolled to prepare the second stack 350 in which the dry electrode film 300 (300a and/or 300b) is disposed on one surface or two opposite surfaces of the first stack 250. For example, in some embodiments, the dry electrode film 300 (300a and/or 300b) may be disposed on one surface of the first stack 250 and rolled to prepare the second stack 350 having a structure illustrated in FIG. 2A. In some embodiments, the dry electrode film 300 (300a and/or 300b) may be disposed on each of the two opposite surfaces of the first stack 250 and rolled to prepare the second stack 350 having a structure illustrated in FIG. 2B. Rolling may be, for example, roll pressing, a flat pressing, and/or the like, but embodiments of the present disclosure are not necessarily limited thereto. Pressure during rolling may be, for example, in a range of about 1.0 ton/cm$^2$ to about 10.0 ton/cm$^2$. If (e.g., when) the pressure during rolling is excessively increased, the electrode current collector 100 may be cracked. If (e.g., when) the pressure during rolling is excessively low, a binding force between the electrode current collector 100 and the dry electrode film 300 (300a and/or 300b) may be low.

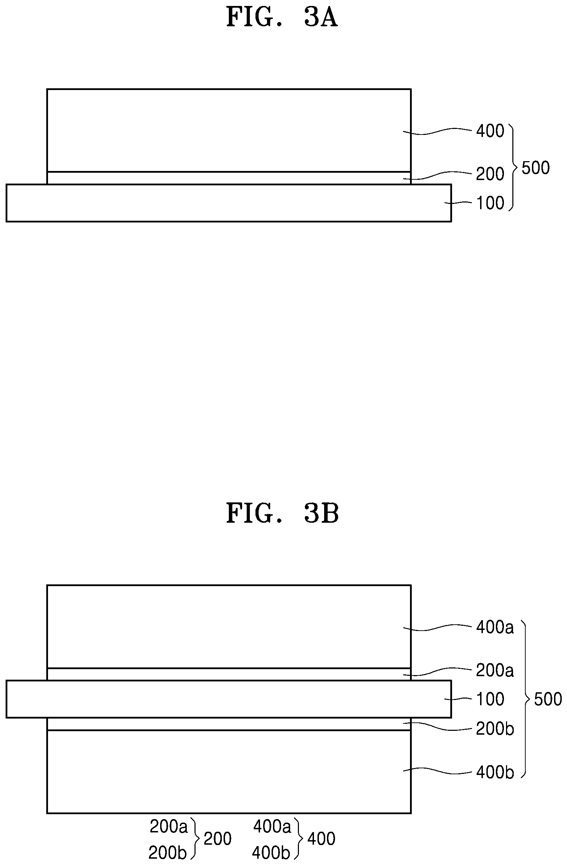

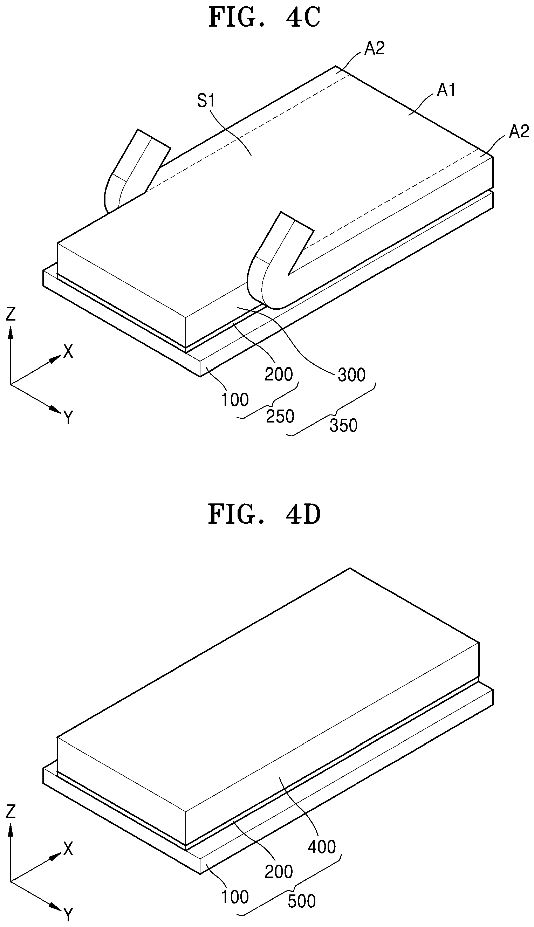

Referring to FIGs. 3A, 3B, 4C, and 4D, at least a portion of the second region A2 of the dry electrode film 300 (300a and/or 300b) may be pulled to separate the second region A2 from the first region A1, thereby providing a dry electrode 500. For example, in some embodiments, at one end portion of the dry electrode film 300 (300a and/or 300b), a portion of the second region A2 may be folded at an angle of about 90 degrees to about 180 degrees and then may be pulled to separate the second region A2 from the first region A1. Because the dry electrode film 300 (300a and/or 300b) has anisotropic tensile strength, the second region A2 may be selectively separated from the dry electrode film 300 (300a and/or 300b). The second region A2 may be separated to prepare the dry electrode 500. The dry electrode 500 may include a dry electrode active material layer 400 (400a and/or 400b) disposed on the interlayer 200 (200a and/or 200b). In the dry electrode 500, the dry electrode active material layer 400 (400a and/or 400b) disposed directly on the electrode current collector 100 may be absent. In the dry electrode 500, the dry electrode active material layer 400 (400a and/or 400b) may be selectively disposed on the interlayer 200 (200a and/or 200b). In the dry electrode 500, the shape and position of the interlayer 200 (200a and/or 200b) may be adjusted to easily adjust the shape and position of the dry electrode active material layer 400 (400a and/or 400b), thereby preventing or reducing the dry electrode active material layer 400 (400a and/or 400b) from being separated from the electrode current collector 100.

Referring to FIGs. 2A, 2B, and 4B to 4D, the dry electrode film 300 (300a and/or 300b) may include the first region A1 and the second region A2, and the second region A2 may be separated from (e.g., abut) the first region A1, for example, in a machine direction (MD) of the dry electrode film 300 (300a and/or 300b). The MD may be, for example, a direction in which the dry electrode film 300 (300a and/or 300b) is stretched during preparation of the dry electrode film 300 (300a and/or 300b). Referring to FIGs. 4A to 4D, the MD may be, for example, an X-axis direction. The direction in which the dry electrode film 300 (300a and/or 300b) is stretched may be confirmed from an electron microscope image of a surface or cross section of the dry electrode film 300 (300a and/or 300b). The direction in which a stretched binder is oriented on the surface or cross section of the dry electrode film 300 (300a and/or 300b) may be the MD of the dry electrode film 300 (300a and/or 300b). The stretched binder may include, for example, a fibrillized binder. A direction in which the fibrillized binder is oriented may be, for example, the MD of the dry electrode film 300 (300a and/or 300b). A direction perpendicular to the MD may be a transverse direction (TD). Referring to FIGs. 4A to 4D, the TD may be, for example, a Y-axis direction. Because the second region A2 is separated from (e.g., abut) the first region in the MD of the dry electrode film 300 (300a and/or 300b), the second region A2 may be more easily separated from the dry electrode film 300 (300a and/or 300b).

Referring to FIGs. 1A to 4F, MD tensile strength MDS of the dry electrode film 300 (300a and/or 300b) may be different from, for example, TD tensile strength TDS of the dry electrode film 300 (300a and/or 300b). Because the dry electrode film 300 (300a and/or 300b) has anisotropic tensile strength, the MD tensile strength MDS may be different from the TD tensile strength TDS. A ratio MDS/TDS of the MD tensile strength MDS to the TD tensile strength TDS of the dry electrode film 300 (300a and/or 300b) may be, for example, 1.1 or more, 1.5 or more, 2 or more, or 3 or more, 4 or more, 5 or more, or 10 or more. In one or more embodiments, the ratio MDS/TDS of the MD tensile strength MDS to the TD tensile strength TDS of the dry electrode film 300 (300a and/or 300b) may be, for example, in a range of about 1.1 to about 100, about 1.5 to about 50, about 2 to about 40, about 3 to about 30, about 4 to about 25, about 5 to about 20, or about 10 to about 20 (e.g. about 10 to about 15). Because the ratio MDS/TDS of the MD tensile strength MDS to the TD tensile strength TDS of the dry electrode film 300 (300a and/or 300b) has a value in such a range, the second region A2 may be more easily and selectively separated from the dry electrode film 300 (300a and/or 300b). If (e.g., when) the MD tensile strength MDS of the dry electrode film 300 (300a and/or 300b) is substantially the same as the TD tensile strength TDS thereof, because the dry electrode film 300 (300a and/or 300b) has isotropic tensile strength, it may be difficult to selectively separate the second region A2 from the dry electrode film 300 (300a and/or 300b). If (e.g., when) the ratio MDS/TDS of the MD tensile strength MDS to the TD tensile strength TDS of the dry electrode film 300 (300a and/or 300b) is excessively large, during a process of moving the dry electrode film 300 (300a and/or 300b) to laminate the dry electrode film 300 (300a and/or 300b), a possibility of fracture of the dry electrode film 300 (300a and/or 300b) may increase, and adhesive strength of the dry electrode film 300 (300a and/or 300b) in a TD may decrease even after lamination.

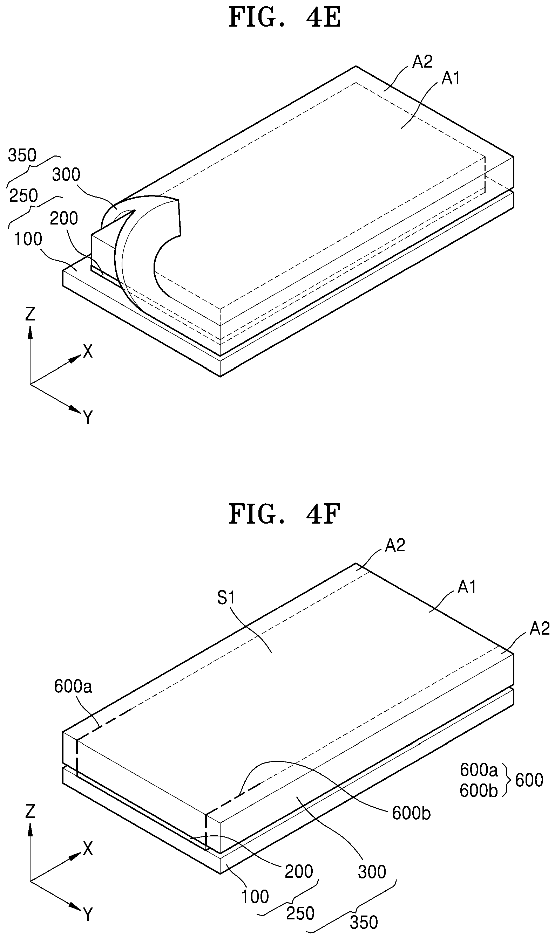

Referring to FIG. 4E, the dry electrode film 300 (300a and/or 300b) may include the first region A1 and the second region A2, and the second region A2 may be separated from (e.g., surround) the first region A1, for example, along an outer periphery of the interlayer 200 (200a and/or 200b). Because the second region A2 is separated from the first region A1 along the outer periphery of the interlayer 200 (200a and/or 200b), the dry electrode film 300 (300a and/or 300b) may be selectively disposed on the interlayer 200 (200a and/or 200b). The position and/or shape of the dry electrode film 300 (300a and/or 300b) disposed on the interlayer 200 (200a and/or 200b) may be selected according to the position and/or shape of the interlayer 200 (200a and/or 200b). For example, in some embodiments, the dry electrode film 300 (300a and/or 300b) which has substantially the same shape as the interlayer 200 (200a and/or 200b) and has a larger area than the interlayer 200 (200a and/or 200b) (e.g. in a plan view, such as a view in a stacking direction of the dry electrode) may be disposed on the interlayer 200 (200a and/or 200b) having a square shape. The dry electrode film 300 (300a and/or 300b) may include the first region A1 having substantially the same shape and area as the interlayer 200 (200a and/or 200b) (e.g. in a plan view, such as a view in a stacking direction of the dry electrode) and the second region A2 which extends from the first region A1 beyond the outer periphery of the interlayer 200 (200a and/or 200b) and is disposed around (e.g., abut) the first region A1. The second region A2 of the dry electrode film 300 (300a and/or 300b) may be pulled to selectively separate the second region A2 from the first region A1 along the outer periphery of the interlayer 200 (200a and/or 200b), and the dry electrode film 300 (300a and/or 300b) having substantially the same shape and area as the interlayer 200 (200a and/or 200b) (e.g. in a plan view, such as a view in a stacking direction of the dry electrode) may be disposed on the interlayer 200 (200a and/or 200b).

In the dry electrode 500 manufactured by separating the second region A2 from the first region A1 along the outer periphery of the interlayer 200 (200a and/or 200b), the MD tensile strength MDS of the dry electrode film 300 (300a and/or 300b) may be different from the TD tensile strength TDS thereof, and the ratio MDS/TDS of the MD tensile strength MDS to the TD tensile strength TDS of the dry electrode film 300 (300a and/or 300b) may be in a range of about 5 to about 20, about 7 to about 17, or about 10 to about 15. Because the ratio MDS/TDS of the MD tensile strength MDS to the TD tensile strength TDS of the dry electrode film 300 (300a and/or 300b) has a value in such a range, the second region A2 may be effectively separated from the first region A1 along the interlayer 200 (200a and/or 200b). If (e.g., when) the ratio MDS/TDS of the MD tensile strength MDS to the TD tensile strength TDS of the dry electrode film 300 (300a and/or 300b) is excessively small, because the dry electrode film 300 (300a and/or 300b) has substantially isotropic tensile strength, it may be difficult to selectively separate the second region A2 from the first region A1. If (e.g., when) the ratio MDS/TDS of the MD tensile strength to the TD tensile strength TDS of the dry electrode film 300 (300a and/or 300b) is excessively large, the dry electrode film 300 (300a and/or 300b) may be separated in the MD of the dry electrode film 300 (300a and/or 300b) without being separated along the outer periphery of the interlayer 200 (200a and/or 200b). As a result, the shape of the interlayer 200 (200a and/or 200b) may be different from the shape of the dry electrode film 300 (300a and/or 300b).

Referring to FIG. 4F, the dry electrode film 300 (300a and/or 300b) may further include, for example, a cut line 600 (600a and/or 600b) disposed and provided on at least a portion of a boundary between the first region A1 and the second region along the boundary. Because the dry electrode film 300 (300a and/or 300b) further includes the cut line 600 (600a and/or 600b), the second region A2 may be more effectively and easily separated from the first region A1. For example, in one or more embodiments, the cut line 600 (600a and/or 600b) may be a line region that is continuously or intermittently cut in advance along the boundary between the first region A1 and the second region A2. In some embodiments, the cut line 600 (600a and/or 600b) may be introduced onto the dry electrode film 300 (300a and/or 300b) utilizing, for example, a separate cutting and/or perforating device. In some embodiments, the cut line 600 (600a and/or 600b) may be introduced onto the dry electrode film 300 (300a and/or 300b) before or after the dry electrode film 300 (300a and/or 300b) is disposed on the interlayer 200 (200a and/or 200b).

In one or more embodiments, in the dry electrode film 300 (300a and/or 300b), the cut line 600 (600a and/or 600b) may be disposed and provided along, for example, a portion or the entirety of the outer periphery of the interlayer 200 (200a and/or 200b). In some embodiments, the cut line 600 (600a and/or 600b) may be disposed and provided along a portion of the outer periphery of the interlayer 200 (200a and/or 200b). Because the cut line 600 (600a and/or 600b) is disposed along a portion of the outer periphery of the interlayer 200 (200a and/or 200b), a process of introducing the cut line 600 (600a and/or 600b) onto the dry electrode film 300 (300a and/or 300b) may be further simplified. As a result, the method of preparing the dry electrode 500 may be simplified. For example, because the cut line 600 (600a and/or 600b) is disposed along a portion of the outer periphery of the interlayer 200 (200a and/or 200b), it may be possible to easily prepare the dry electrode active material layer 400 (400a and/or 400b) having a simple form. In some embodiments, the cut line 600 (600a and/or 600b) may be disposed along the entirety of the outer periphery of the interlayer 200 (200a and/or 200b). Because the cut line 600 (600a or 600b) may be disposed along the entirety of the outer periphery of the interlayer 200 (200a and/or 200b), the second region A2 may be more effectively separated from the first region A1. For example, because the cut line 600 (600a and/or 600b) is disposed along the entirety of the outer periphery of the interlayer 200 (200a and/or 200b), it may be possible to prepare the dry electrode active material layer 400 (400a and/or 400b) with patterns having one or more suitable forms.

A length of the cut line 600 (600a and/or 600b) may be, for example, 5% or less, 3% or less, or 1% or less of a total length of the boundary between the first region A1 and the second region A2. In some embodiments, the length of the cut line 600 (600a and/or 600b) may be, for example, 5% or less, 3% or less, or 1% or less of a total length of the outer periphery of the interlayer 200 (200a and/or 200b). In some embodiments, the length of the cut line 600 (600a and/or 600b) may be, for example, 5% or less, 3% or less, or 1% or less of a total length of the dry electrode film 300 (300a and/or 300b) in the MD. In some embodiments, the length of the cut line 600 (600a and/or 600b) may be, for example, 5% or less, 3% or less, or 1% or less of a total length of the dry electrode film 300 (300a and/or 300b) in the TD. Because the length of the cut line 600 (600a and/or 600b) is in such a range, a process of introducing the cut line 600 (600a and/or 600b) onto the dry electrode films 300 (300a and/or 300b) may be facilitated. For example, after the cut line 600 (600a and/or 600b) is introduced only at one end portion of the dry electrode film 300 (300a and/or 300b), a portion of the second region A2 may be pulled along the cut line 600 (600a and/or 600b) to separate the second region A2 from the first region A1, thereby more easily preparing the dry electrode 500.

Referring to FIG. 4A and FIG. 4B, the dry electrode film 300 (300a and/or 300b) may have, for example, a first area S1 (e.g. in a plan view, such as a view in a stacking direction of the dry electrode). The interlayer 200 (200a and/or 200b) may have, for example, a second area S2 (e.g. in a plan view, such as a view in a stacking direction of the dry electrode). A ratio S2/S1 of the second area S2 to the first area S1 may be in a range of about 0.5 to about 0.99, about 0.6 to about 0.98, about 0.7 to about 0.97, about 0.8 to about 0.96, or about 0.9 to about 0.95. Because the ratio S2/S1 of the second area S2 to the first area S1 has a value such a range, the second region A2 may be more effectively removed from the dry electrode film 300 (300a and/or 300b) so that the dry electrode active material layer 400 (400a and/or 400b) may be more effectively disposed on the interlayer 200 (200a and/or 200b). If (e.g., when) the ratio S2/S1 of the second area S2 to the first area S1 is excessively large, it may be difficult to remove the second region A2 from the dry electrode film 300 (300a and/or 300b). If (e.g., when) the ratio S2/S1 of the second area S2 to the first area S1 is excessively small, an area of the second region A2 separated and removed from the dry electrode film 300 (300a and/or 300b) may be excessively increased.

Referring to FIG. 4A and FIG. 4B, the electrode current collector 100 may have, for example, a third area S3 (e.g. in a plan view, such as a view in a stacking direction of the dry electrode). The interlayer 200 (200a and/or 200b) may have, for example, the second area S2 (e.g. in a plan view, such as a view in a stacking direction of the dry electrode). The ratio S2/S3 of the second area S2 to the third area S3 may be in a range of about 0.5 to about 0.99, about 0.6 to about 0.98, about 0.7 to about 0.97, about 0.8 to about 0.96, or about 0.9 to about 0.95. Because the ratio S2/S3 of the second area S2 to the third area S3 has a value in such a range, the dry electrode active material layer 400 (400a and/or 400b) having one or more suitable forms may be introduced onto the electrode current collector 100. If (e.g., when) the ratio S2/S3 of the second area S2 to the third area S3 is excessively large, because the dry electrode active material layer 400 (400a and/or 400b) disposed to be spaced apart from the electrode current collector 100 is formed, the structural stability of the dry electrode 500 may be deteriorated. If (e.g., when) the ratio S2/S3 of the second area S2 to the third area S3 is excessively small, an area of the dry electrode active material layer 400 (400a and/or 400b) disposed on the electrode current collector 100 is excessively small, and an energy density of the dry electrode 500 may be decreased.

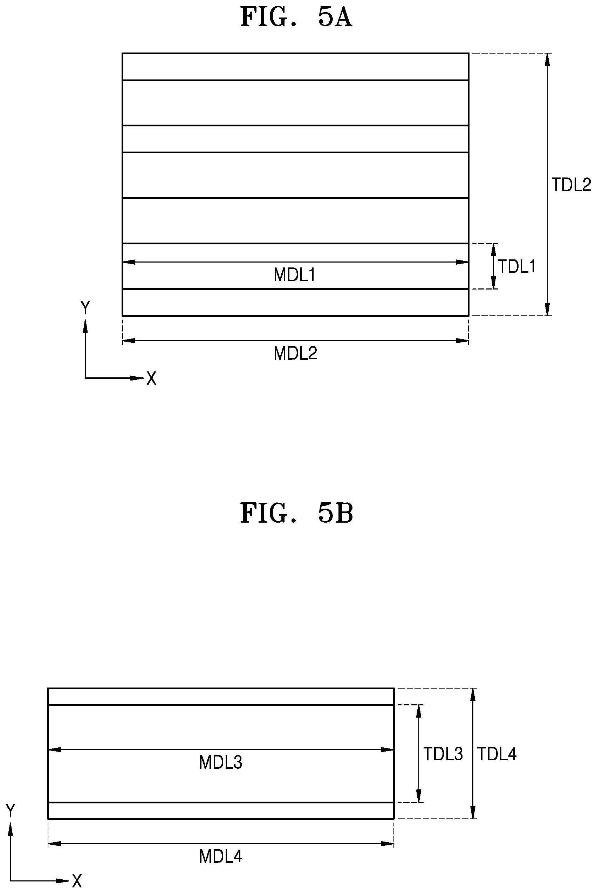

Referring to FIG. 5A and FIG. 3B, the dry electrode 500 prepared through the method of preparing the dry electrode 500 according to one or more embodiments may include a plurality of dry electrode active material layers 400 (400a and/or 400b) disposed on, for example, one or two opposite surfaces of an electrode current collector 100 to be spaced apart from each other in a TD of the electrode current collector 100. Each of the plurality of dry electrode active material layers 400 (400a and/or 400b) may have, for example, a first MD length MDL1 and a first TD length TDL1. The electrode current collector 100 may have, for example, a second MD length MDL2 and a second TD length TDL2. Referring to FIG. 5A, an MD may be, for example, an X-axis direction, the TD may be, for example, a Y-axis direction, and a thickness direction may be, for example, a Z-axis direction. A ratio MDL1/TDL1 of the first MD length MDL1 of the dry electrode active material layer 400 (400a and/or 400b) and the first TD length TDL1 of the dry electrode active material layer 400 (400a and/or 400b) may be, for example, 20 or more, 30 or more, 50 or more, or 100 or more. A ratio TDL1/TDL2 of the first TD length TLD1 of the dry electrode active material layer 400 (400a and/or 400b) and the second TD length TDL2 of the electrode current collector 100 may be, for example, 0.3 or less, 0.2 or less, or 0.1 or less. Accordingly, the plurality of dry electrode active material layers 400 (400a and/and 400b) may be disposed to be spaced apart from each other in the TD of the electrode current collector 100, and the dry electrode 500 having a stripe form may be formed. The interlayers 200 (200a and/and 200b) may be disposed between the plurality of dry electrode active material layers 400 (400a and/or 400b) and the electrode current collector 100. Each of the plurality of dry electrode active material layers 400 (400a and/or 400b) may have first MD tensile strength MDS1 and first TD tensile strength TDS1, and a ratio MDS1/TDS1 of the first MD tensile strength MDS1 to the first TD tensile strength TDS1 may be 2 or more, 3 or more, 4 or more, 5 or more, or 10 or more. In some embodiments, the ratio MDS/TDS of the MD tensile strength to the TD tensile strength of each of the plurality of dry electrode active material layers 400 (400a and/or 400b) may be, for example, in a range of about 2 to about 40, about 3 to about 30, about 4 to about 25, about 5 to about 20, or about 10 to about 20 (e.g. about 10 to about 15). Because the ratio MDS/TDS of the MD tensile strength to the TD tensile strength of each of the plurality of dry electrode active material layers 400 (400a and/or 400b) has a value in such a range, it may be possible to more easily prepare the dry electrode active material layers 400 (400a and/or 400b) having such a form.

Referring to FIG. 5B and FIG. 3B, the dry electrode 500 prepared through the method of preparing the dry electrode 500 according to one or more embodiments may include the dry electrode active material layer 400 (400a and/or 400b) disposed, for example, on one surface or two opposite surfaces of the electrode current collector 100 in an MD of the electrode current collector 100. The dry electrode active material layer 400 (400a and/or 400b) may have, for example, a third MD length MDL3 and a third TD length TDL3. The electrode current collector 100 may have, for example, a fourth MD length MDL4 and a fourth TD length TDL4. Referring to FIG. 5B, the MD may be, for example, an X-axis direction, a TD may be, for example, a Y-axis direction, and a thickness direction may be, for example, a Z-axis direction. Both ends of the dry electrode active material layer 400 (400a and/or 400b) in the TD (e.g., a TD length direction) may be in contact with, for example, both (e.g., opposite) ends of the electrode current collector 100 in the TD (e.g., the TD length direction). The third MD length MDL3 of the dry electrode active material layer 400 (400a and/or 400b) may be, for example, in a range of about 99 % to about 101 %, about 99.5 % to about 100.5 %, about 99.8 % to about 100.2 %, or about 99.9 % to about 100.1 % of the fourth MD length MDL4 of the electrode current collector 100. Both ends of the dry electrode active material layer 400 (400a and/or 400b) in a TD (e.g., Y-axis direction) may be spaced apart from both (e.g., opposite) ends of the electrode current collector 100 in the TD, respectively. The third TD length TDL3 of the dry electrode active material layer 400 (400a and/or 400b) may be, for example, in a range of about 60 % to about 99 %, about 70 % to about 99 %, about 80 % to about 99 %, or about 90 % to about 99 % of the fourth TD length TDL4 of the electrode current collector 100. The dry electrode active material layer 400 (400a and/or 400b) may have, for example, first MD tensile strength MDS1 and first TD tensile strength TDS1, and a ratio MDS1/TDS1 of the first MD tensile MDS1 to the first TD tensile strength TDS1 may be 2 or more, 3 or more, 4 or more, 5 or more, or 10 or more. In some embodiments, a ratio MDS/TDS of MD tensile strength MDS to TD tensile strength TDS of each of the plurality of dry electrode active material layers 400 (400a and/or 400b) may be, for example, in a range of about 2 to about 40, about 3 to about 30, about 4 to about 25, about 5 to about 20, or about 10 to about 20 (e.g. about 10 to about 15). Because the ratio MDS/TDS of the MD tensile strength MDS to the TD tensile strength TDS of each of the plurality of dry electrode active material layers 400 (400a and/or 400b) has a value in such a range, it may be possible to more easily prepare the dry electrode active material layers 400 (400a and/or 400b) having such a form.

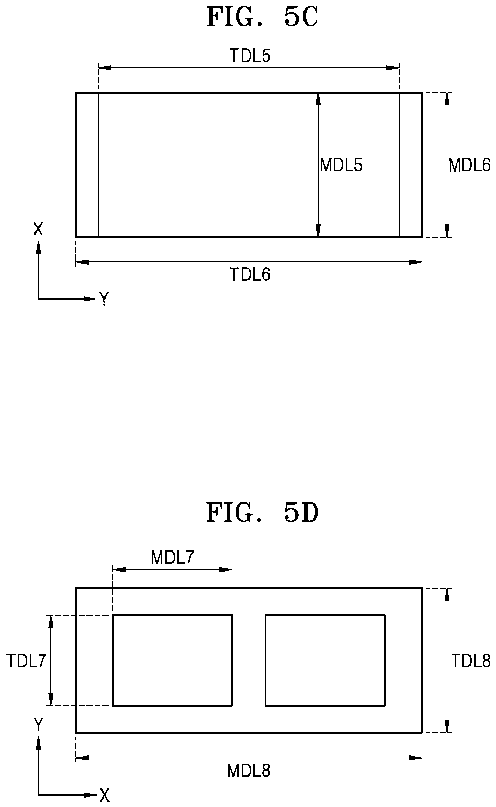

Referring to FIG. 5C and FIG. 3B, the dry electrode 500 prepared through the method of preparing the dry electrode 500 according to one or more embodiments may include the dry electrode active material layer 400 (400a and/or 400b) disposed on, for example, one surface or two opposite surfaces of the electrode current collector 100 in an MD of the electrode current collector 100. The dry electrode active material layer 400 (400a and/or 400b) may have, for example, a fifth MD length MDL5 and a fifth TD length TDL5. The electrode current collector 100 may have, for example, a sixth MD length MDL6 and a sixth TD length TDL6. Referring to FIG. 5C, the MD may be, for example, an X-axis direction, a TD may be, for example, a Y-axis direction, and a thickness direction may be, for example, a Z-axis direction. Both ends of the dry electrode active material layer 400 (400a and/or 400b) in a TD (e.g., Y-axis direction) may be spaced apart from both (e.g., simultaneously) ends of the electrode current collector 100 in a TD (e.g., Y-axis direction), respectively. The fifth TD length TDL5 of the dry electrode active material layer 400 (400a and/or 400b) may be, for example, in a range of about 60 % to about 99 %, about 70 % to about 99 %, about 80 % to about 99 %, or about 90 % to about 99 % of the sixth TD length TDL6 of the electrode current collector 100. In some embodiments, both ends of the dry electrode active material layer 400 (400a and/or 400b) in a MD may be in contact with, for example, both (e.g., opposite) ends of the electrode current collector 100 in the MD. The fifth MD length MDL5 of the dry electrode active material layer 400 (400a and/or 400b) may be, for example, in a range of about 99 % to about 101 %, about 99.5 % to about 100.5 %, about 99.8 % to about 100.2 %, or about 99.9 % to about 100.1 % of the sixth MD length MDL6 of the electrode current collector 100. Each of the plurality of dry electrode active material layers 400 (400a and 400b) may have first MD tensile strength MDS1 and first TD tensile strength TDS1, and a ratio MDS1/TDS1 of the first MD tensile strength MDS1 to the first TD tensile strength TDS1 may be 2 or more, 3 or more, 4 or more, 5 or more, or 10 or more. In one or more embodiments, a ratio MDS/TDS of MD tensile strength MDS to TD tensile strength TDS of each of the plurality of dry electrode active material layers 400 (400a and 400b) may be, for example, in a range of about 2 to about 40, about 3 to about 30, about 4 to about 25, about 5 to about 20, or about 10 to about 20 (e.g. about 10 to about 15). Because the ratio MDS/TDS of the MD tensile strength MDS to the TD tensile strength TDS of each of the plurality of dry electrode active material layers 400 (400a and 400b) has a value in such a range, it may be possible to more easily prepare the dry electrode active material layers 400 (400a and 400b) having such a form.

Referring to FIG. 5D and FIG. 3B, the dry electrode 500 prepared through the method of preparing the dry electrode 500 according to one or more embodiments may include the plurality of dry electrode active material layers 400 (400a and/or 400b) disposed, for example, one surface or two surfaces of the electrode current collector 100 to be spaced apart from each other in an MD of the electrode current collector 100. The plurality of dry electrode active material layers 400 (400a and/or 400b) may have a patterned arrangement. Each of the plurality of dry electrode active material layers 400 (400a and/or 400b) may be spaced apart from each of both (e.g., opposite) ends of the electrode current collector 100 in the MD and both (e.g., opposite) ends thereof in a TD. Each of the plurality of dry electrode active material layers 400 (400a and/or 400b) may have, for example, a seventh MD length MDL7 and a seventh TD length TDL7. The electrode current collector 100 may have, for example, an eighth MD length MDL8 and an eighth TD length TDL8. Referring to FIG. 5D, the MD may be, for example, an X-axis direction, the TD may be, for example, a Y-axis direction, and a thickness direction may be, for example, a Z-axis direction. A ratio MDL7/TDL7 of the seventh MD length MDL7 and the seventh TD length TDL7 of the dry electrode active material layer 400 (400a and/or 400b) may be for example, 5 or less, 4 or less, 3 or less, or 2 or less. In one or more embodiments, the seventh TD length TDL7 of the dry electrode active material layer 400 (400a and/or 400b) may be in a range of about 60 % to about 99%, about 70 % to about 99 %, about 80 % to about 99 %, or about 90 % to about 99% of the eighth TD length TDL8 of the electrode current collector 100. The dry electrode active material layer 400 (400a and/or 400b) may have first MD tensile strength MDS1 and first TD tensile strength TDS1, and a ratio MDS1/TDS1 of the first MD tensile strength MDS1 to the first TD tensile strength TDS1 may be in a range of about 5 to about 20, about 7 to about 17, or about 10 to about 15. Because a ratio MDS/TDS of MD tensile strength MDS to TD tensile strength TDS of the dry electrode active material layer 400 (400a and/or 400b) has a value in such a range, it may be possible to more easily prepare a plurality of dry electrode active material layers having such a form.

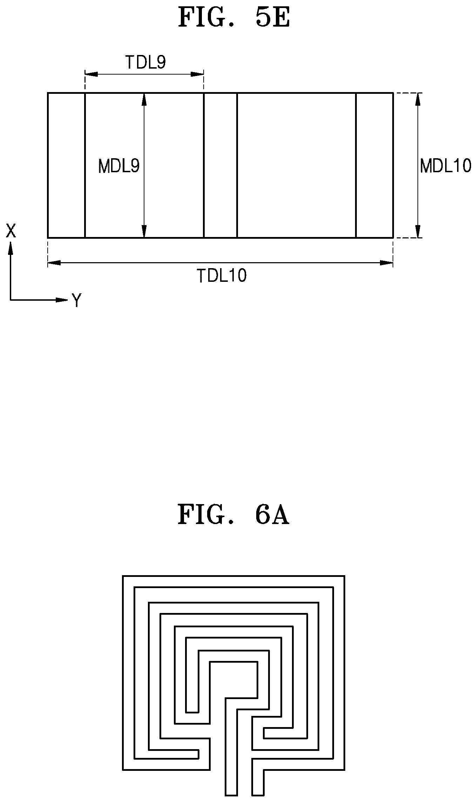

Referring to FIG. 5E and FIG. 3B, the dry electrode 500 prepared through the method of preparing the dry electrode 500 according to one or more embodiments may include the plurality of dry electrode active material layers 400 (400a and/or 400b) disposed on, for example, one surface or two opposite surfaces of the electrode current collector 100 to be spaced apart from each other in an TD of the electrode current collector 100. The plurality of dry electrode active material layers 400a, 400b, and 400 may have a patterned arrangement. Each of the plurality of dry electrode active material layers 400 (400a and/or 400b) may be disposed to be spaced apart from each of both (e.g., opposite) ends of the electrode current collector 100 in the TD. Each of the plurality of dry electrode active material layers 400 (400a and/or 400b) may have, for example, a ninth MD length MDL9 and a ninth TD length TDL9. The electrode current collector 100 may have, for example, a tenth MD length MDL10 and a tenth TD length TDL10. Referring to FIG. 5E, the MD may be, for example, an X-axis direction, a TD may be, for example, a Y-axis direction, and a thickness direction may be, for example, a Z-axis direction. A ratio TDL9/MDL9 of the ninth TD length TDL9 to the ninth MD length MDL9 of the dry electrode active material layer 400 (400a and/or 400b) may be, for example, 5 or less, 4 or less, 3 or less, or 2 or less. In some embodiments, the ratio MDL9/MDL10 of the ninth MD length MDL9 of the dry electrode active material layer 400 (400a and/or 400b) to the tenth MD length MDL10 of the electrode current collector 100 may be in a range of about 99 % to about 101 %, about 99.5 % to about 100.5, about 99.8 % to about 100.2 %, or about 99.9 % to about 100.1 %. The dry electrode active material layer 400 (400a and/or 400b) may have first MD tensile strength MDS1 and first TD tensile strength TDS1, and a ratio MDS1/TDS1 of the first MD tensile strength MDS1 to the first TD tensile strength TDS1 may be in a range of about 5 to about 20, about 7 to about 17, or about 10 to about 15. Because a ratio MDS/TDS of MD tensile strength MDS to TD tensile strength TDS of the dry electrode active material layer 400 (400a and/or 400b) has a value in such a range, it may be possible to more easily prepare a plurality of dry electrode active material layers having such a form.

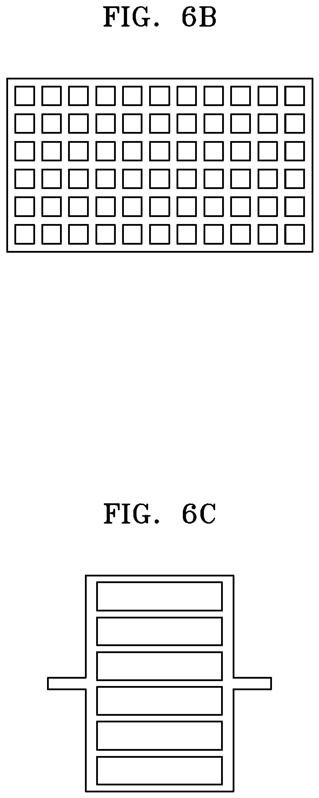

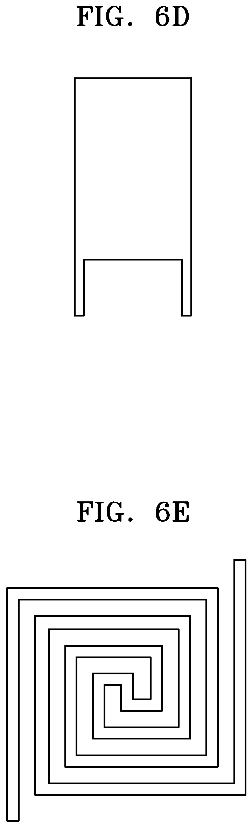

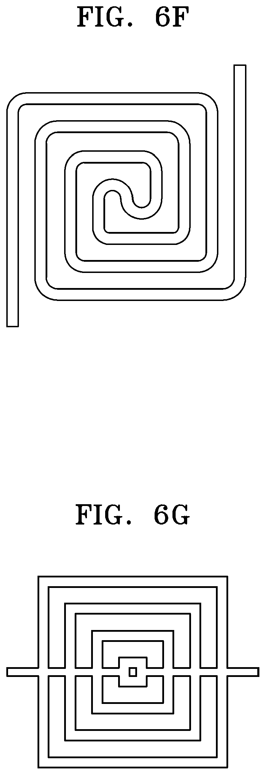

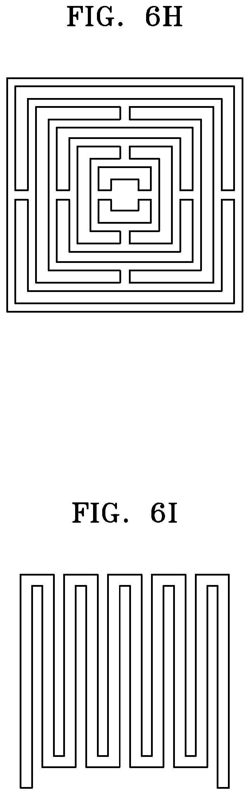

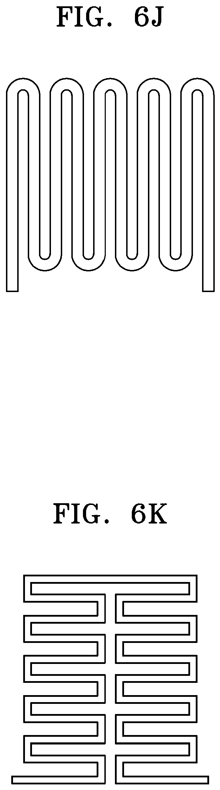

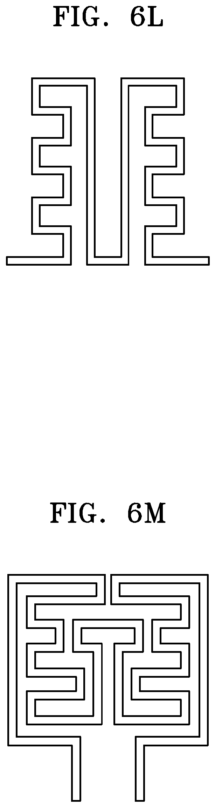

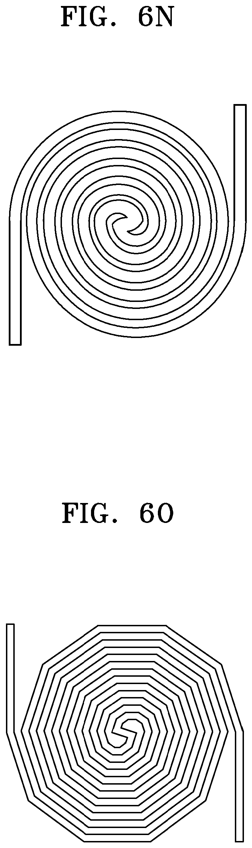

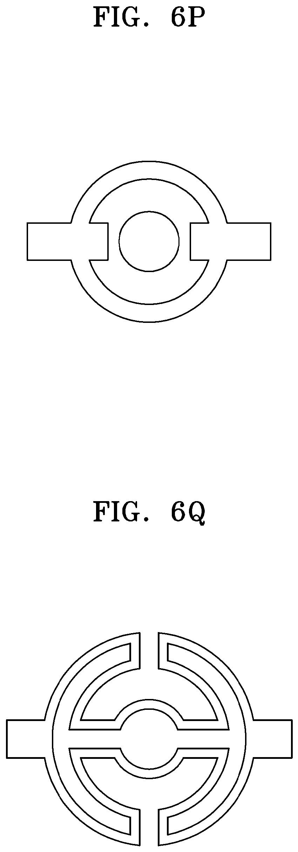

Referring to FIG. 5D and FIG. 5E and FIG. 3B, the dry electrode active material layer 400 (400a and/or 400b) may have, for example, a patterned arrangement, and the patterned arrangement may include, for example, a box pattern arrangement, an annular pattern arrangement, a serpentine pattern arrangement, or a combination thereof. The patterned arrangement may have, for example, forms of FIGs. 6A to 6Q.

Referring to FIGs. 1A to 4F, the dry electrode film 300 (300a and/or 300b) may be, for example, a self-standing film. The dry electrode film 300 (300a and/or 300b) may maintain, for example, the form of a film without a support. Therefore, the dry electrode film 300 (300a and/or 300b) may be prepared as a separate self-standing film and then disposed on the electrode current collector 100. Because the dry electrode film 300 (300a and/or 300b) is prepared as a dry type or kind, the dry electrode film 300 (300a and/or 300b) may not include (e.g., may exclude) a (e.g., any) process solvent that is intentionally added. For example, the dry electrode film 300 (300a and/or 300b) may not include (e.g., may exclude) a (e.g., any) residual process solvent. Unintended trace amounts of a solvent may remain in the dry electrode film 300 (300a and/or 300b), but the solvent is not a process solvent that is intentionally added. Therefore, the dry electrode active material layer 400 (400a and/or 400b) prepared from the dry electrode film 300 (300a and/or 300b) may be distinguished from a wet electrode active material layer prepared by mixing an electrode component and a process solvent and then removing a portion or the entirety of the process solvent through drying.

The dry electrode film 300 (300a and/or 300b) may include a dry electrode active material. The dry electrode active material may be, for example, an electrode active material that is not impregnated, dissolved, or dispersed in a process solvent. The dry electrode active material may be, for example, an electrode active material that does not include or come into contact with a process solvent. The dry electrode active material may be, for example, an electrode active material that does not come into contact with a process solvent during a method of preparing the dry electrode film 300 (300a and/or 300b) and the dry electrode 500.

In one or more embodiments, the dry electrode active material may be, for example, a dry positive electrode active material.

As a positive electrode active material, for example, any material, which is a lithium metal oxide and is utilized in the art, may be utilized without limitation.

For example, in one or more embodiments, the positive electrode active material may include at least one composite oxide of lithium and a metal selected from cobalt, manganese, nickel, and combinations thereof. Non-limiting examples of the positive electrode active material may include a compound represented by any one of formulas of $Li_aA_{1-b}B'_bD_2$ (wherein $0.90 \leq a \leq 1$ and $0 \leq b \leq 0.5$), $Li_aE_{1-b}B'_bO_{2-c}D_c$ (wherein $0.90 \leq a \leq 1$, $0 \leq b \leq 0.5$, and $0 \leq c \leq 0.05$), $LiE_{2-b}B'_bO_{4-c}D_c$ (wherein $0 \leq b \leq 0.5$ and $0 \leq c \leq 0.05$), $Li_aNi_{1-b-c}Co_bB'_cD_\alpha$ (wherein $0.90 \leq a \leq 1$, $0 \leq b \leq 0.5$, $0 \leq c \leq 0.05$, and $0 < \alpha \leq 2$), $Li_aNi_{1-b-c}Co_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$), $Li_aNi_{1-b-c}Co_bB'_cO_{2-\alpha}F'_2$ (wherein $0.90 \leq a \leq 1$, $0 \leq b \leq 0.5$, $0 \leq c \leq 0.05$, and $0 < \alpha < 2$), $Li_aNi_{1-b-c}Mn_bB'_cD_\alpha$ (wherein $0.90 \leq a \leq 1$, $0 \leq b \leq 0.5$, $0 \leq c \leq 0.05$, and $0 < \alpha \leq 2$), $Li_aNi_{1-b-c}Mn_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$), $Li_aNi_{1-b-c}Mn_bB'_cO_{2-\alpha}F'_2$ (wherein $0.90 \leq a \leq 1$, $0 \leq b \leq 0.5$, $0 \leq c \leq 0.05$, and $0 < \alpha < 2$), $Li_aNi_bE_cG_dO_2$ (wherein $0.90 \leq a \leq 1$, $0 \leq b \leq 0.9$, and $0 \leq c \leq 0.5$, and $0.001 \leq d \leq 0.1$), $Li_aNi_bCo_cMn_dG_eO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (wherein $0.90 \leq a \leq 1$ and $0.001 \leq b \leq 0.1$), $Li_aCoG_bO_2$ (wherein $0.90 \leq a \leq 1$ and $0.001 \leq b \leq 0.1$), $Li_aMnG_bO_2$ (wherein $0.90 \leq a \leq 1$ and $0.001 \leq b \leq 0.1$), $Li_aMn_2G_bO_4$ (wherein $0.90 \leq a \leq 1$ and $0.001 \leq b \leq 0.1$), $QO_2$, $QS_2$, $LiQS_2$; $V_2O_5$; $LiV_2O_5$; $LiI'O_2$; $LiNiVO_4$, $Li_{(3-f)}J_2(PO_4)_3$ (wherein $0 \leq f \leq 2$), $Li_{(3-f)}Fe_2(PO_4)_3$ (wherein $0 \leq f \leq 2$), and $LiFePO_4$.

In the formulas representing the above-described compounds, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof.

In one or more embodiments, a compound in which a coating layer is added to a surface of the above compounds may be utilized. In some embodiments, a mixture of the above compounds and a compound to which a coating layer is added may be utilized. The coating layer added to the surface of the above compound may include, for example, a coating element compound of an oxide or a hydroxide of a coating element, an oxyhydroxide of a coating element, an oxycarbonate of a coating element, and/or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of forming a coating layer may be selected within a range that does not adversely affect the physical properties of a positive electrode active material. A coating method may include, for example, spray coating, dipping, and/or the like. Because a coating method may be well understood by those skilled in the art, a detailed description thereof will not be provided.

In one or more embodiments, the positive electrode active material may be, for example, a composite positive electrode active material.

The composite positive electrode active material may include, for example, a core including a lithium transition metal oxide, and a shell disposed along (e.g., on) a surface of the core, wherein the shell may include at least one first metal oxide represented by formula of $M_aO_b$ (wherein $0<a\leq3$, $0<b<4$, and when a is 1, 2, or 3, b is not an integer), and graphene, the first metal oxide is disposed in a graphene matrix, M may be at least one metal selected from Groups 2 to 13, Group 15, and Group 16 of the Periodic Table of Elements (e.g. at least one metal from Group 13), the lithium transition metal oxide may include nickel, and a nickel content (e.g., amount) may be 80 mol% or more with respect to the total number of moles of transition metals of the lithium transition metal oxide. The shell including the first metal oxide and graphene is disposed on the core of the composite positive electrode active material.

Graphene according to the related art is difficult to uniformly coat on the core due to aggregation. In some embodiments, because the composite positive electrode active material utilizes a composite including a plurality of first metal oxides disposed in a graphene matrix, while the aggregation of graphene is prevented or reduced, a substantially uniform shell may be disposed on the core. Therefore, contact between the core and an electrolyte may be effectively blocked, thereby preventing or reducing side reactions due to contact between the core and the electrolyte. In some embodiments, reduction of nickel ions ($Ni^{3+}{\rightarrow}Ni^{2+}$) and cation mixing by the electrolyte may be suppressed or reduced, thereby suppressing the formation of a resistive layer of a NiO phase and/or the like. Also, elution of nickel ions may be suppressed or reduced. Because the shell including graphene has flexibility, the shell may easily accommodate a change in volume of the composite positive electrode active material during charging/discharging so that the occurrence of cracks in the composite positive electrode active material may be suppressed or reduced. Because graphene has high electronic conductivity, interface resistance between the composite positive electrode active material and the electrolyte may be reduced. Accordingly, despite the introduction of the shell including graphene, internal resistance of a lithium battery may be maintained or reduced. In some embodiments, because the first metal oxide has withstand voltage, the deterioration of the lithium transition metal oxide included in the core may be prevented or reduced during charging/discharging at a high voltage. As a result, it may improve the cycle characteristics and high-temperature stability of a lithium battery including the composite positive electrode active material. The shell may include, for example, one type or kind of first metal oxide or two or more types (kinds) of different first metal oxides. In some embodiments, in the composite positive electrode active material, the lithium transition metal oxide may have a high nickel content (e.g., amount) of 80 mol% or more with respect to the total number of moles of the transition metals of the lithium transition metal oxide, and also, the shell including the first metal oxide and graphene may be disposed on the core, thereby providing high discharge capacity and cycle characteristics at the same time. Therefore, the composite positive electrode active material having a high nickel content (e.g., amount) of 80 mol% or more may still provide excellent or suitable lifespan characteristics while providing improved capacity as compared with a composite positive electrode active material having a relatively low nickel content (e.g., amount). A metal included in the first metal oxide may include, for example, at least one selected from Al, Nb, Mg, Sc, Ti, Zr, V, W, Mn, Fe, Co, Pd, Cu, Ag, Zn, Sb, and Se.

The first metal oxide may include, for example, at least one selected from $Al_2O_z$ (wherein $0<z<3$), $NbO_x$ (wherein $0<x<2.5$), $MgO_x$ (wherein $0<x<1$), $Sc_2O_z$ (wherein $0<z<3$), $TiO_y$ (wherein $0<y<2$), $ZrO_y$ (wherein $0<y<2$), $V_2O_z$ (wherein $0<z<3$), $WO_y$ (wherein $0<y<2$), $MnO_y$ (wherein $0<y<2$), $Fe_2O_z$ (wherein $0<z<3$), $Co_3O_w$ (wherein $0<w<4$), $PdO_x$ (wherein $0<x<1$), $CuO_x$ (wherein $0<x<1$), $AgO_x$ (wherein $0<x<1$), $ZnO_x$ (wherein $0<x<1$), $Sb_2O_z$ (wherein $0<z<3$), and $SeO_y$ (wherein $0<y<2$). Because the first metal oxide is disposed in the graphene matrix, the uniformity of the shell disposed on the core may be improved, and the withstand voltage of the composite positive electrode active material may be further improved. For example, in some embodiments, the shell may include $Al_2O_z$ (wherein $0<z<3$). The shell may further include one or more types (kinds) of second metal oxides represented by a formula of $M_aO_c$ (wherein $0<a\leq3$, $0<c\leq4$, and when a is 1, 2, or 3, c is an integer). M may be at least one metal selected from Groups 2 to 13, Group 15, and Group 16 of the Periodic Table of Elements (e.g. at least one metal from Group 13). For example, in one or more embodiments, the second metal oxide may include the same metal as the first metal oxide, and c/a that is a ratio of c to a of the second metal oxide may have a larger value than b/a that is a ratio of b to a of the first metal oxide. For example, c/a > b/a. The second metal oxide may be selected from, for example, $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. A portion or the entirety of the second metal oxide is reduced to obtain the first metal oxide. Accordingly, the first metal oxide has a lower oxygen content (e.g., amount) and a lower metal oxidation number than the second metal oxide. For example, in some embodiments, the shell may include $Al_2O_z$ (wherein 0<z<3) as the first metal oxide and $Al_2O_3$ as the second metal oxide. In the composite positive electrode active material, for example, the graphene included in the shell may be chemically bound to the transition metal of the lithium transition metal oxide included in the core through a chemical bond. A carbon atom (C) of the graphene included in the shell may be chemically bound to a transition metal (Me) of the lithium transition metal oxide through a C-O-Me bond (for example, a C-O-Ni bond), for example, utilizing an oxygen atom. The graphene included in the shell is chemically bound to the transition metal of the lithium transition metal oxide included in the core through a chemical bond, thereby allowing the core and the shell to be a composite. Therefore, the composite of the core and the shell may be distinguished from a simple physical mixture of graphene and a lithium transition metal oxide. In some embodiments, the first metal oxide and the graphene included in the shell may also chemically bound through a chemical bond. In one or more embodiments, the chemical bond may be, for example, a covalent bond or an ionic bond. The covalent bond may be, for example, a bond including at least one of an ester group, an ether group, a carbonyl group, an amide group, a carbonate anhydride group, or an acid anhydride group. The ionic bond may be, for example, a bond including a carboxylic acid ion, an ammonium ion, an acyl cation group, and/or the like. In one or more embodiments, the shell may have, for example, a thickness of about 1 nm to about 5 μm, about 1 nm to about 1 μm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. Because the shell has a thickness in such a range, it may suppress or reduce an increase in internal resistance of a lithium battery including the composite positive electrode active material.

A content (e.g., amount) of the composite (e.g., the shell) included in the composite positive electrode active material may be 3 wt% or less, 2 wt% or less, 1 wt% or less, 0.5 wt% or less, or 0.2 wt% or less of the total weight of the composite positive electrode active material. In some embodiments, the content (e.g., amount) of the composite may be in a range of about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% % to about 0.2 wt%, about 0.01 wt% to about 0.1 wt%, or about 0.03 wt% to about 0.07 wt% of the total weight of the composite positive electrode active material. Because the composite positive electrode active material includes the composite in such a range, it may further improve the cycle characteristics of a lithium battery including the composite positive electrode active material. At least one selected from the first metal oxide and the second metal oxide included in the composite may have an average particle diameter of about 1 nm to about 1 μm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. Because the first metal oxide and/or the second metal oxide have a particle diameter in such a nano range, the first metal oxide and/or the second metal oxide may be more uniformly distributed in the graphene matrix of the composite. Therefore, such a composite may be uniformly applied on the core without agglomeration to form the shell. In some embodiments, the first metal oxide and/or the second metal oxide may have a particle diameter in such a range and thus may be more uniformly disposed on the core. Accordingly, the first metal oxide and/or the second metal oxide may be uniformly on the core, thereby more effectively exhibiting withstand voltage characteristics. The average particle diameters of the first metal oxide and the second metal oxide may be measured, for example, through a measurement device utilizing a laser diffraction method or a dynamic light scattering method. In some embodiments, an average particle diameter is measured utilizing a laser scattering particle size distribution meter (for example, LA-920 manufactured by Horiba Corporation) and is a value of a median diameter (D50) when metal oxide particles are accumulated to 50 % from small particles in volume conversion.

The core included in the composite positive electrode active material may include, for example, lithium transition metal oxides represented by Chemical Formulas 1 to 8.

**Formula 1** $\quad Li_aCo_xM_yO_{2-b}A_b$

In Formula 1, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

**Formula 2** $\quad Li_aNi_xCo_yM_zO_{2-b}A_b$

In Formula 2, $1.0 \leq a \leq 1.2$, $0 \leq b \leq 0.2$, $0.8 \leq x < 1$, $0 \leq y \leq 0.3$, $0 \leq z \leq 0.3$, $x+y+z=1$, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

**Formula 3** $\quad LiNi_xCo_yMn_zO_2$

**Formula 4** $\quad LiNi_xCo_yAl_zO_2$

In Formula 3 and Formula 4, $0.8 \leq x \leq 0.95$, $0 \leq y \leq 0.2$, $0 < z \leq 0.2$, and $x+y+z=1$.

**Formula 5** $\quad LiNi_xCo_yMn_zAl_wO_2$

In Formula 5, $0.8 \leq x \leq 0.95$, $0 \leq y \leq 0.2$, $0 < z \leq 0.2$, $0 < w \leq 0.2$, and $x+y+z+w=1$.

**Formula 6** $\quad Li_aNi_xMn_yM'_zO_{2-b}A_b$

In Formula 6, $1.0 \leq a \leq 1.2$, $0 \leq b \leq 0.2$, $0 < x \leq 0.3$, $0.5 \leq y < 1$, $0 \leq z \leq 0.3$, $x+y+z=1$, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

**Formula 7** $\quad Li_aM1_xM2_yPO_{4-b}X_b$

In Formula 7, $0.90 \leq a \leq 1.1$, $0 \leq x \leq 0.9$, $0 \leq y \leq 0.5$, $0.9 < x+y < 1.1$, $0 \leq b \leq 2$, M1 may be chromium (Cr), manganese (Mn), iron (Fe), cobalt (Co), nickel (Ni), copper (Cu), zirconium (Zr), or a combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or combinations thereof, and X may be O, F, S, P, or combinations thereof.

**Formula 8** $\quad Li_aM3_zPO_4$

In Formula 8, $0.90 \leq a \leq 1.1$, $0.9 \leq z \leq 1.1$, and M3 may be chromium (Cr), manganese (Mn), iron (Fe), cobalt (Co), nickel (Ni), copper (Cu), zirconium (Zr), or a combination thereof.

In one or more embodiments, the dry electrode active material may be, for example, a dry negative electrode active material.

As a negative electrode active material, any material, which is utilized as a negative electrode active material for a lithium battery in the art, may be utilized. For example, in one or more embodiments, the negative electrode active material may include at least one selected from a lithium metal, a metal capable of forming an alloy with lithium, a transition metal oxide, a non-transition metal oxide, and a carbon-based material. The metal capable of forming an alloy with lithium may be, for example, Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof, and is not Si), or a Sn-Y alloy (wherein Y is an alkali metal, an alkaline earth metal, a Group 13 element, a Group 14 element, a transition metal, a rare earth element, or a combination thereof, and is not Sn). The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. The non-transition metal oxide may be, for example, $SnO_2$, $SiO_x$ (wherein $0 < x \leq 2$), and/or the like. The carbon-based material may be, for example, crystalline carbon, amorphous carbon, or a mixture thereof. The crystalline carbon may be, for example, graphite such as non-shaped (e.g., irregularly shaped), plate-shaped, flake-shaped, spherical, or fibrous natural graphite or artificial graphite. The amorphous carbon may be, for example, soft carbon (low-temperature fired carbon) or hard carbon, mesophase pitch carbide, fired coke, and/or the like.

The dry electrode film 300 (300a and/or 300b) may include, for example, a dry binder. The dry binder may be, for example, a binder that is not impregnated, dissolved, or dispersed in a process solvent. The dry binder may be, for example, a binder that does not include or come into contact with a process solvent. The dry binder may be, for example, a binder that does not come into contact with a process solvent during a process of preparing the dry electrode film 300 (300a and/or 300b) and the dry electrode 500. The dry binder may be, for example, a fibrillized binder. The fibrillized binder may serve as a matrix for supporting and binding a dry electrode active material and other components included in the dry electrode film 300 (300a and/or 300b). It may be confirmed from, for example, a scanning electron microscope image of a cross section of an electrode that the fibrillized binder has a fibrous form. The fibrillized binder may have, for example, an aspect ratio of 10 or more, 20 or more, 50 or more, or 100 or more.

The dry binder may include, for example, polytetrafluoroethylene (PTFE), a polyvinylidene fluoride-hexafluoropropylene (PVDF-co-HFP) copolymer, polyvinylidene fluoride (PVDF), polyvinyl alcohol, polyacrylonitrile, carboxylmethylcellulose (CMC), starch, hydroxypropylcellulose, cellulose, polyvinyl pyrrolidone, polyethylene, polypropylene, an ethylene-propylene-diene monomer (EPDM), a sulfonated EPDM, styrene-butadiene rubber (SBR), fluoro rubber, or a copolymer thereof, or combinations thereof, but embodiments of the present disclosure are not necessarily limited thereto. Any binder utilized in preparing the dry electrode 500 may be utilized. In one or more embodiments, the dry binder may include a fluorine-based binder. The fluorine-based binder may include, for example, PTFE, a PVDF-HFP copolymer, or PVDF, or combinations thereof.

A content (e.g., amount) of the dry binder included in the dry electrode film 300 (300a and/or 300b) may be, for example, in a range of 1 about wt% to about 10 wt% or about 1 wt% to about 5 wt% with respect to the total weight of the dry electrode film 300 (300a and/or 300b). Because the dry electrode film 300 (300a and/or 300b) includes the dry binder in such a range, a binding force of the dry electrode film 300 (300a and/or 300b) may be improved, and the prepared dry electrode 500 may maintain a high energy density.

In one or more embodiments, the dry electrode film 300 (300a and/or 300b) may further include, for example, a conductive material. The conductive material may be, for example, a dry conductive material. The dry conductive material may be, for example, a conductive material that is not impregnated, dissolved, or dispersed in a process solvent. The dry conductive material may be, for example, a conductive material that does not include or come into contact with a process solvent. The dry conductive material may include, for example, a carbon-based conductive material. The carbon-based conductive material may include Denka black, carbon black, graphite particles, natural graphite, artificial graphite, acetylene black, Ketjen black, a carbon fiber, carbon nanotubes, and/or the like, but embodiments of the present disclosure are not limited thereto. Any material utilized as a carbon-based conductive material in the art may be utilized.

A content (e.g., amount) of the dry conductive material included in the dry electrode film 300 (300a and/or 300b) may be, for example, about 1 wt% to about 10 wt% or about 1 wt% to about 5 wt% with respect to the total weight of the dry electrode film 300 (300a and/or 300b). Because the dry electrode film 300 (300a and/or 300b) includes the dry conductive material in such a range, the conductivity of the prepared dry electrode 500 may be improved, and the cycle characteristics of a lithium battery including the dry electrode 500 may be improved.

In one or more embodiments, the dry electrode film 300 (300a and/or 300b) may be prepared, for example, through the following method.

First, a mixture is prepared by dry-mixing a dry electrode active material, a dry conductive material, and a dry binder.

The dry mixing refers to that mixing is performed in a state in which a process solvent is not included. A process solvent may be, for example, a solvent utilized in preparing an electrode slurry in the art. The process solvent may be, for example, water, and N-methylpyrrolidone (NMP), and/or the like, but embodiments of the present disclosure are not limited thereto. A material is not limited as long as the material is a process solvent utilized in preparing an electrode slurry. The dry-mixing may be performed at a rotation speed of 10 rpm to 10,000 rpm or 100 rpm to 10,000 rpm at a temperature of 25 °C to 120 °C (e.g. 25 °C to 65 °C) utilizing a stirrer. The dry-mixing may be performed for 1 minute to 200 minutes or 1 minutes to 150 minutes utilizing the stirrer.

The dry-mixing may be performed, for example, one or more times. First, a first mixture may be prepared by primarily dry-mixing the dry electrode active material, the dry conductive material, and the dry binder. The primary dry-mixing may be performed, for example, at a rotation speed of 2,000 rpm or less at a temperature of 25 °C to 120 °C (e.g. 25 °C to 65 °C) for 15 minutes or less. In some embodiments, the primary dry-mixing may be performed, for example, at a rotation speed of 500 rpm to 2,000 rpm at a temperature of 25 °C to 120 °C (e.g. 25 °C to 65 °C) for 5 minutes to 15 minutes. The dry electrode active material, the dry conductive material, and the dry binder may be uniformly mixed through the primary dry-mixing. Subsequently, a second mixture may be prepared by secondarily dry-mixing the dry electrode active material, the dry conductive material, and the dry binder. The secondary dry-mixing may be performed, for example, at a rotation speed of 4,000 rpm or more at a temperature of 25 °C to 65 °C for 10 minutes or more. In some embodiments, the secondary dry-mixing may be performed, for example, at a rotation speed of 4,000 rpm to 9,000 rpm at a temperature of 25 °C to 65 °C for 10 minutes to 60 minutes. A dry mixture including a fibrillized dry binder may be obtained through the secondary dry-mixing.

The stirrer may be, for example, a kneader. The stirrer may include, for example, a chamber, at least one rotating shaft disposed inside the chamber to rotate, and a blade rotatably coupled to the rotating shaft and disposed in a length direction of the rotating shaft. The blade may be, for example, at least one selected from a ribbon blade, a sigma blade, a jet (Z) blade, a dispersion blade, and a screw blade. By including the blade, without a solvent, the dry electrode active material, the dry conductive material, and the dry binder may be effectively mixed to prepare a doughlike mixture. The prepared mixture may be put into an extrusion device and extruded into the form of a sheet. Pressure during extrusion may be, for example, in a range of 4 MPa to 100 MPa or 10 MPa to 90 MPa. The obtained mixture may be in the form of a film. For example, the obtained mixture may be the dry electrode film 300 (300a and/or 300b).

Non-limiting examples of the dry conductive material may include at least one selected from Denka black, carbon black, graphite particles, natural graphite, artificial graphite, acetylene black, Ketjen black, and a carbon fiber; carbon nanotubes; a metal powder, a metal fiber, and a metal tube of copper, nickel, aluminium, or silver; and a conductive polymer such as a polyphenylene derivative, but embodiments of the present disclosure are not limited thereto. Any material utilized as a conductive material in the art may be utilized. The conductive material may be, for example, a carbon-based conductive material.

Non-limiting examples of the dry binder may include a vinylidene fluoride/hexafluoropropylene copolymer, PVDF, polyacrylonitrile, polymethyl methacrylate (PMMA), PTFE, a mixture of the above polymers, a SBR-based polymer, and/or the like. Any material utilized in the art may be utilized.

In some embodiments, a plasticizer or a pore former may be further added to an electrode active material composition to form pores in an electrode plate.

The contents of the dry electrode active material, the dry conductive material, and the dry binder utilized in an electrode active material layer are at levels commonly utilized in a lithium battery.

A positive electrode active material may be utilized as an electrode active material of a positive electrode. For the positive electrode active material, a section of the above-described electrode may be referred to. A negative electrode active material may be utilized as an electrode active material of a negative electrode. For the negative electrode active material, a section of the above-described electrode may be referred to.

The interlayer 200 (200a and/or 200b) may be disposed directly, for example, on one surface or two opposite surfaces of the electrode current collector 100. Therefore, other layers may not be disposed between the electrode current collector 100 and the interlayer 200 (200a and/or 200b). Because the interlayer 200 (200a and/or 200b) is disposed directly on one surface or two opposite surfaces of the electrode current collector 100, it may further improve a binding force between the electrode current collector 100 and the dry electrode film 300 (300a and/or 300b) or between the electrode current collector 100 and the dry electrode active material layer 400 (400a and/or 400b).

A thickness of the interlayer 200 (200a and/or 200b) may be, for example, 30 % or less, 25 % or less, 20 % or less, 15 % or less, 10 % or less, 5 % or less, or 3 % or less of a thickness of the electrode current collector 100. In one or more embodiments, the thickness of the interlayer 200 (200a and/or 200b) may be, for example, in a range of about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 % of the thickness of the electrode current collector 100. In one or more embodiments, the thickness of the interlayer 200 (200a and/or 200b) may be, for example, in a range of about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, or about 700 nm to about 1.3 $\mu$m. Because the interlayer 200 (200a and/or 200b) has a thickness in such a range, it may further improve a binding force between the electrode current collector 100 and the dry electrode film 300 (300a and/or 300b) and between the electrode current collector 100 and the dry electrode active material layer 400 (400a and/or 400b) and suppress or reduce an increase in interfacial resistance.

The interlayer 200 (200a and/or 200b) may include, for example, a binder. Because the interlayer 200 (200a and/or 200b) includes the binder, it may further improve a binding force between the electrode current collector 100 and the dry electrode film 300 (300a and/or 300b) and between the electrode current collector 100 and the dry electrode active material layer 400 (400a and/or 400b). The binder included in the interlayer 200 (200a and/or 200b) may be, for example, a conductive binder and/or a non-conductive binder. The conductive binder may include, for example, an ion-conductive binder and/or an electron-conductive binder. A binder having both (e.g., simultaneously) ion conductivity and electron conductivity may belong to an ion-conductive binder and may also belong to an electron-conductive binder.

Non-limiting examples of the ion-conductive binder may include poly(styrene sulfonate) (PSS), a PVDF-HFP copolymer, polyvinyl fluoride (PVF), PVDF, poly(methylmethacrylate) (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyaniline, and polyacetylene. In some embodiments, the ion-conductive binder may include a polar functional group. Non-limiting examples of the ion-conductive binder including a polar functional group may include Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(sulfonated poly(aryl ether ketone) (SPAEK), poly[bis(benzimidazobenzisoquinolinones)] (SPBIBI), PSS, lithium 9,10-diphenylanthracene-2-sulfonate (DPASLi$^+$), and/or the like. Non-limiting examples of the electron-conductive binders may include polyacetylene, polythiophene, polypyrrole, poly(p-phenylene), poly(phenylenevinylene), poly(phenylenesulfide), polyaniline, and/or the like. In some embodiments, the interlayer 200 (200a and/or 200b) may be conductive layers including, for example, a conductive polymer.

The binder included in the interlayer 200 (200a and/or 200b) may be selected from binders included in the dry electrode film 300 (300a and/or 300b). In some embodiments, the interlayer 200 (200a and/or 200b) may include the same binder as the dry electrode film 300 (300a and/or 300b). In some embodiments, the binder included in the interlayer 200 (200a, and/or 200b) may be, for example, a fluorine-based binder. In some embodiments, the fluorine-based binder included in the interlayer 200 (200a and/or 200b) may include, for example, PVDF. The interlayer 200 (200a and/or 200b) may be disposed on the electrode current collector 100, for example, as a dry or wet type or kind. The interlayer 200 (200a and/or 200b) may be, for example, a binding layer including a binder.

In one or more embodiments, the interlayer 200 (200a and/or 200b) may further include, for example, a carbon-based conductive material. The carbon-based conductive material included in the interlayer 200 (200a and/or 200b) may be selected from the carbon-based conductive materials included in the dry electrode film 300 (300a and/or 300b). In some embodiments, the interlayer 200 (200a and/or 200b) may include the same carbon-based conductive material as the dry electrode film 300 (300a and/or 300b). Because the interlayer 200 (200a and/or 200b) includes the carbon-based conductive material, the interlayer 200 (200a and/or 200b) may be, for example, a conductive layer. In some embodiments, the interlayer 200 (200a and/or 200b) may be, for example, a conductive layer including a binder and a carbon-based conductive material.

In some embodiments, the interlayers 200 (200a and/or 200b) may be disposed on the electrode current collector 100 as a dry type or kind, for example, through chemical vapor deposition (CVD), physical vapor deposition (PVD), and/or the like. In some embodiments, the interlayer 200 (200a and/or 200b) may be disposed on the electrode current collector 100 as a wet type or kind, for example, through spin coating, dip coating, and/or the like. In some embodiments, the interlayer 200 (200a and/or 200b) may be disposed on the electrode current collector 100 by, for example, depositing a carbon-based conductive material on the electrode current collector 100 through deposition. The dry-coated interlayer 200 (200a and/or 200b) may be made of a carbon-based conductive material and may not include (e.g., may exclude) a (e.g., any) binder. In some embodiments, the interlayer 200 (200a and/or 200b) may be disposed on the electrode current collector 100 by, for example, applying a composition including a carbon-based conductive material, a binder, and a solvent on the surface of the electrode current collector 100 and drying the composition. The interlayer 200 (200a and/or 200b) may have a single-layer structure or a multi-layer structure including a plurality of layers.

In one or more embodiments, the first stack 250 may be prepared, for example, through the following method.

An operation of arranging at least one interlayer 200 (200a and/or 200b) on at least one surface (e.g., on one surface or two opposite surfaces) of the electrode current collector 100 to prepare the first stack 250 may include, for example, providing the electrode current collector 100 and arranging the interlayer 200 (200a and/or 200b) on at least one surface (e.g., one surface or two opposite surfaces) of the electrode current collector 100. For a material of the electrode current collector 100, a section of the description of the electrode current collector 100 may be referred to. A positive electrode current collector may be, for example, an aluminium foil. A negative electrode current collector may be, for example, a copper foil. In the arranging of at least one interlayer 200 (200a and/or 200b) on at least one surface (e.g., one surface or two opposite surfaces) of the electrode current collector 100, the interlayer 200 (200a and/or 200b) may be disposed on one surface or two opposite surfaces of the electrode current collector 100 as a dry or wet type or kind. In dry coating, for example, a carbon-based conductive material and/or a precursor thereof may be applied on one surface or two opposite surfaces of the electrode current collector 100 through deposition and/or the like. The deposition may be performed in a range of room temperature to a high temperature and in a range of atmospheric pressure to vacuum pressure. If (e.g., when) the interlayer 200 (200a and/or 200b) disposed through dry coating is made of a carbon-based material, the interlayer 200 (200a and/or 200b) may not include (e.g., may exclude) a (e.g., any) binder. In wet coating, for example, a composition including a carbon-based conductive material and a binder may be applied on one surface or two opposite surfaces of the electrode current collector 100. The composition may include, for example, a carbon-based conductive material, a binder, and a process solvent. For the carbon-based conductive material and the binder, a section of the description of the electrode may be referred to. The process solvent may be selected from solvents utilized in preparing an electrode slurry in the art. The process solvent may be removed through drying after the composition is applied on the electrode current collector 100. Coating may include spin coating, dip coating, and/or the like, but embodiments of the present disclosure are not limited thereto. Any suitable coating utilized in the art may be utilized.

In the dry electrode 500 prepared through the method of preparing the dry electrode 500 according to one or more embodiments, one surface of the electrode current collector 100, which is adjacent to the dry electrode active material layer 400 (400a or 400b) and is not covered by the interlayer 200 (200a or 200b), may be free of burrs and/or depressions (e.g., may not include burrs and/or depressions). Burrs and/or depressions, which are generated through laser cutting for removing the second region A2, may be prevented or reduced from being generated on one surface of the electrode current collector 100 which is adjacent to the dry electrode active material layer 400 (400a or 400b) and is not covered by the interlayer 200 (200a or 200b). Accordingly, during charging/discharging of the dry electrode 500, side reactions caused by burrs and/or depressions may be prevented or reduced. As a result, the cycle characteristics of a lithium battery including the dry electrode 500 may be improved.

In the dry electrode 500 prepared through the method of preparing the dry electrode 500 according to one or more embodiments, if (e.g., when) the dry electrode active material layer 400 (400a or 400b) is measured utilizing a surface and interfacial measuring analysis system (SAICAS), a change ratio of a vertical relative binding force $F_{VR}$ according to a depth from a first point spaced apart from a surface of the dry electrode active material layer 400 (400a or 400b) by 5 % of the total thickness of the dry electrode active material layer 400 (400a or 400b) in a direction of the electrode current collector 100 to a second point spaced apart from a surface of the electrode current collector 100 by 5 % of the total thickness of the dry electrode active material layer 400 (400a or 400b) may be 300 % or less, 250 % or less, 200 % or less, 150 % or less, or 140 % or less.

The change ratio of the vertical relative binding force $F_{VR}$ is calculated from Equation 1. For a SAICAS measurement method, for example, Evaluation Example 1 may be referred to.

$$\text{change ratio of vertical relative binding force } F_{VR} = [(\text{maximum value of vertical relative binding force} - \text{minimum value of vertical relative binding force})/\text{minimum value of vertical relative binding force}] \times 100 \qquad \text{Equation 1}$$

In the dry electrode 500, if (e.g., when) measurement is performed utilizing the SAICAS, because the change ratio of the vertical relative binding force $F_{VR}$ of the dry electrode active material layer 400 (400a or 400b) is 300 % or less, the uniformity of the distribution of components of the dry electrode active material layer 400 (400a or 400b) may be improved in the dry electrode 500. In some embodiments, because side reactions and an increase in internal resistance due to non-substantially uniform distribution of the components in the dry electrode active material layer 400 (400a or 400b) are suppressed or reduced, the reversibility of electrode reactions may be improved. Accordingly, the cycle characteristics of a lithium battery may be improved even in the case of the dry electrode 500 having high loading. In one or more embodiments, the change ratio of the vertical relative binding force $F_{VR}$ of the dry electrode active material layer 400 (400a or 400b) may be, for example, in a range of about 10 % to about 300 %, about 20 % to about 250 %, about 30 % to about 200 %, about 40 % to about 160 %, about 50 % to about 150 %, or about 60 % to about 140 %.

In the dry electrode 500 prepared through the method of preparing the dry electrode 500 according to one or more embodiments, if (e.g., when) the dry electrode active material layer 400 (400a or 400b) is measured utilizing the SAICAS, a horizontal binding force ratio of a first horizontal binding force $F_{HA1}$ at a first point spaced apart from the surface of the dry electrode active material layer 400 (400a or 400b) by 10 % of the total thickness of the dry electrode active material layer 400 (400a or 400b) in a direction of the electrode current collector 100 to a second horizontal binding force $F_{HA2}$ at a second point spaced apart from the surface of the electrode current collector 100 by 10 % of the total thickness of the dry electrode active material layer 400 (400a or 400b) may be 50 % or more.

The horizontal binding force ratio is represented, for example, by Equation 2.

$$\text{horizontal binding force ratio} = [\text{second horizontal binding force } F_{HA2}/\text{first horizontal binding force } F_{HA1}] \times 100 \qquad \text{Equation 2}$$

In an electrode, during SAICAS measurement, if (e.g., when) a horizontal binding force ratio is 50 % or more, the uniformity of the distribution of components in an electrode may be further improved. If (e.g., when) the electrode has a horizontal binding force ratio such a range, it may further improve the cycle characteristics of a lithium battery adopting such an electrode. In one or more embodiments, the horizontal binding force ratio may be, for example, in a range of about 50 % to about 300 %, about 50 % to about 250 %, about 50 % to about 200 %, about 50 % to about 150 %, or about 50 % to about 100 %.

As a material constituting the electrode current collector 100, any material, which does not react with lithium, for example, any material, which does not form an alloy or compound with lithium and has conductivity (e.g., is a conductor), may be utilized. The electrode current collector 100 may include, for example, a metal or an alloy. The electrode current collector 100 may be made of, for example, indium (In), copper (Cu), magnesium (Mg), stainless steel, titanium (Ti), iron (Fe), cobalt (Co), nickel (Ni), zinc ( Zn), aluminium (Al), germanium (Ge), lithium (Li), or an alloy thereof.

The electrode current collector 100 may have a form selected from, for example, a sheet, a foil, a film, a plate, a porous body, a mesoporous body, a through-hole-containing body, a polygonal ring body, a mesh body, a foam body, and a nonwoven body, but embodiments of the present disclosure are not necessarily limited to the form. Any form utilized in the art may be utilized.

The electrode current collector 100 may have a thickness that is reduced as compared with an electrode current collector included in an electrode of the related art. Therefore, by including a thin film current collector, an electrode according to one or more embodiments is distinguished from an electrode of the related art including a thick film current collector. Because an electrode according to one or more embodiments adopts a thin film current collector having a reduced thickness, a thickness of an electrode active material layer in the electrode including the thin film current collector may be relatively increased. As a result, it may increase an energy density of a lithium battery adopting such an electrode. In one or more embodiments, the electrode current collector 100 may have, for example, a thickness of less than 15 μm, 14.5 μm or less, or 14 μm or less. In some embodiments, the electrode current collector 100 may have, for example, a thickness of about 0.1 $\mu$m to less than 15 $\mu$m, about 1 $\mu$m to about 14.5 $\mu$m, about 2 $\mu$m to about 14 $\mu$m, about 3 $\mu$m to about 14 $\mu$m, about 5 $\mu$m to about 14 $\mu$m, or about 10 $\mu$m to about 14 $\mu$m.

The electrode current collector 100 may have reduced surface roughness as compared with an electrode current collector included in the electrode of the related art. Because the surface of the electrode current collector 100 has reduced surface roughness, the electrode current collector 100 may form a substantially uniform interface with the dry electrode active material layer 400 (400a and/or 400b) and/or the interlayer 200 (200a and/or 200b). As a result, it may suppress or reduce local side reactions and/or non-substantially uniform electrode reactions at an interface between the electrode current collector 100 and other layers and improve the cycle characteristics of a lithium battery including such an electrode.

A maximum roughness $R_{max}$ of the surface of the electrode current collector 100 may be, for example, 3 $\mu$m or less, 2 $\mu$m or less, 1 $\mu$m or less, 0.5 $\mu$m or less, or 0.1 $\mu$m or less. In some embodiments, the maximum roughness $R_{max}$ of the surface of the electrode current collector 100 may be, for example, in a range of about 10 nm to about 3 $\mu$m, about 10 nm to about 2 $\mu$m, about 10 nm to about 1 $\mu$m, about 10 nm to about 0.5 $\mu$m, or about 10 nm to about 0.1 $\mu$m.

A mean roughness $R_a$ of the surface of the electrode current collector 100 may be, for example, 2 $\mu$m or less, 1 $\mu$m or less, 0.5 $\mu$m or less, or 0.1 $\mu$m or less. In some embodiments, the mean roughness $R_a$ of the surface of the electrode current collector 100 may be, for example, in a range of about 10 nm to about 2 $\mu$m, about 10 nm to about 1 $\mu$m, about 10 nm to about 0.5 $\mu$m, or about 10 nm to about 0.1 $\mu$m.

The root mean square (RMS) roughness $R_q$ of the surface of the electrode current collector 100 may be, for example, 2 $\mu$m or less, 1 $\mu$m or less, 0.5 $\mu$m or less, or 0.1 $\mu$m or less. In some embodiments, the RMS roughness $R_q$ of the surface of the electrode current collector 100 may be, for example, in a range of about 10 nm to about 2 $\mu$m, about 10 nm to about 1 $\mu$m, about 10 nm to about 0.5 $\mu$m, or about 10 nm to about 0.1 $\mu$m.

In one or more embodiments, the electrode current collector 100 may include, for example, a base film and a metal layer on one surface or two opposite surfaces of the base film. In some embodiments, the electrode current collector 100 may include a substrate, and the substrate may have, for example, a structure including a base film and a metal layer on one surface or two opposite surfaces of the base film. The above-described interlayer may be additionally disposed on the metal layer. The base film may include, for example, a polymer. The polymer may be, for example, a thermoplastic polymer. In some embodiments, the polymer may include, for example, polyethylene terephthalate (PET), polyethylene (PE), polypropylene (PP), polybutylene terephthalate (PBT), polyimide (PI), or a combination thereof. Because the base film includes the thermoplastic polymer, if (e.g., when) a short circuit occurs, the base film may be melted to suppress or reduce a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer may serve as an electrochemical fuse to be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer is decreased, a limit current and/or a maximum current of the electrode current collector 100 may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake made of the same material as a metal of the metal layer. The metal chip may be, for example, a metal foil or a metal mesh. The metal chip may be, for example, an aluminium foil, a copper foil, or a stainless steel (SUS) foil. If (e.g., when) the metal chip is disposed on the metal layer and then welded to the lead tab, the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. The metal chip and/or the lead tab may be added onto a portion of the metal layer. In some embodiments, the base film may have, for example, a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If (e.g., when) the base film has a thickness in such a range, a weight of an electrode assembly may be more effectively reduced. In one or more embodiments, a melting point of the base film may be, for example, in a range of about 100 °C to about 300 °C, about 100 °C to about 250 °C, or about 100 °C to about 200 °C. Because the base film has a melting point in such a range, the base film may be melted and easily coupled to the lead tab in a process of welding the lead tab. In order to improve adhesive strength between the base film and the metal layer, surface treatment such as corona treatment may be performed on the base film. In one or more embodiments, the metal layer may have, for example, a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. When the metal layer has a thickness in such a range, the stability of an electrode assembly may be secured while conductivity is maintained. In one or more embodiments, the metal chip may have, for example, a thickness of about 2 $\mu$m to about 10 $\mu$m, about 2 $\mu$m to about 7 $\mu$m, or about 4 $\mu$m to about 6 $\mu$m. Because the metal chip has a thickness in such a range, the metal layer and the lead tab may be more easily connected. Because the electrode current collector 100 has such a structure, a weight of an electrode may be reduced, thereby improving an energy density. In some embodiments, the electrode current collector 100 may be, for example, a positive electrode current collector. In some embodiments, the electrode current collector 100 may be, for example, a negative electrode current collector.

A dry electrode according to one or more embodiments of the present disclosure may include an electrode current collector, an interlayer on at least one surface (e.g., on one surface or two opposite surfaces) of the electrode current collector, and a dry electrode active material layer on the interlayer, wherein an area of the interlayer is smaller than an area of the electrode current collector (e.g. in a plan view, such as a view in a stacking direction of the dry electrode), a dry electrode active material layer directly on the electrode current collector is absent, the dry electrode active material layer has anisotropic tensile strength, and one surface of the electrode current collector, which is adjacent to one surface of the dry electrode active material layer and is not covered by the interlayer, is free of burrs and/or depressions (e.g., does not include burrs and/or depressions).

In the dry electrode, because one surface of the electrode current collector, which is adjacent to one surface of the dry electrode active material layer and is not covered by the interlayer, is free of burrs and/or depressions, side reactions and/or deterioration caused by burrs and/or depressions during a charging/discharging process may be suppressed or reduced, thereby improving the cycle characteristics of a lithium battery including the dry electrode.

Referring to FIGs. 3A, 3B, 4D, and 5A to 5E, the dry electrode 500 may include an electrode current collector 100, an interlayer 200 (200a and/or 200b) on at least one surface (e.g., on one surface or two opposite surfaces) of the electrode current collector 100, and a dry electrode active material layer 400 (400a and/or 400b) on the interlayer 200 (200a and/or 200b). An area of the interlayer 200 (200a and/or 200b) may be smaller than an area of the electrode current collector 100 (e.g. in a plan view, such as a view in a stacking direction of the dry electrode). The dry electrode active material layer 400 (400a and/or 400b) directly on the electrode current collector 100 may be absent. The dry electrode active material layer 400 (400a and/or 400b) may have anisotropic tensile strength. One surface of the electrode current collector 100, which is adjacent to one surface of the dry electrode active material layer 400 (400a or 400b) and is not covered by the interlayer 200 (200a or 200b), may be free of burrs and/or depressions. For details of the electrode current collector 100, the interlayer 200 (200a and/or 200b), and the dry electrode active material layer 400 (400a and/or 400b), the above-described method of preparing a dry electrode may be referred to. The dry electrode active material layer 400 (400a and/or 400b) may have substantially the same components and/or physical properties as the dry electrode film 300 (300a and/or 300b).

A lithium battery according to one or more embodiments may include a positive electrode, a negative electrode, and an electrolyte between the positive electrode and the negative electrode, wherein at least one of the positive electrode or the negative electrode is the dry electrode 500 prepared through the above-described method of preparing the dry electrode 500.

The lithium battery may include, for example, a lithium ion battery, a lithium solid battery, and/or a lithium air battery.

For example, the lithium battery may be manufactured through the following example method, but embodiments of the present disclosure are not necessarily limited to such a method. The method may be changed according to required conditions.

First, one or both (e.g., simultaneously) of the positive electrode and the negative electrode may be prepared according to the above-described method of preparing the dry electrode 500. In some embodiments, if (e.g., when) one electrode of the positive electrode or the negative electrode is prepared through the above-described method of preparing an electrode, the other electrode may be prepared through a wet preparation method. For example, an electrode slurry including an electrode active material, a conductive material, a binder, and a solvent may be prepared to apply the prepared electrode slurry on an electrode current collector 100 and dry the applied electrode slurry, thereby preparing the other electrode. A conductive material and a binder included in an electrode prepared as a wet type or kind may be selected from the above-described conductive materials and binders utilized in preparing the dry electrode 500.

Next, a separator to be inserted between the positive electrode and the negative electrode is prepared.

As the separator, any separator utilized in a lithium battery may be utilized. For example, a separator having low resistance to the movement of ions in an electrolyte and an excellent or suitable electrolyte impregnation ability may be utilized. For example, the separator may include at least one selected from a glass fiber, polyester, Teflon, PE, polypropylene (PP), PTFE, and combinations thereof and may be in the form of a nonwoven fabric or a woven fabric. For example, in some embodiments, a windable separator including PE, PP, and/or the like may be utilized in a lithium ion battery, and a separator having an excellent or suitable electrolyte impregnation ability may be utilized in a lithium ion polymer battery.

The separator is prepared through the following example method, but embodiments of the present disclosure are not necessarily limited to such a method. A method may be adjusted according to required conditions.

First, a polymer resin, a filler, and a solvent are mixed to prepare a separator composition. The separator composition may be applied directly on an electrode and dried to form the separator. In some embodiments, the separator composition may be cast on a support, and then a separator film peeled off of the support may be laminated on an electrode to form the separator.

A polymer (i.e., polymer resin) utilized in preparing the separator is not particularly limited, and any material utilized in a binding material of an electrode plate may be utilized. For example, the polymer may include a vinylidene fluoride/hexafluoropropylene copolymer, PVDF, polyacrylonitrile, polymethyl methacrylate, or a mixture thereof.

Next, an electrolyte is prepared.

The electrolyte may be, for example, an organic electrolyte solution. The organic electrolyte solution may be prepared, for example, by dissolving a lithium salt in an organic solvent.

Any material may be utilized as long as the material is utilized as an organic solvent in the art. Non-limiting examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

Any material may be utilized as long as the material is utilized as a lithium salt in the art. Non-limiting examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number), LiCl, LiI, or a mixture thereof.

In some embodiments, the electrolyte may be a solid electrolyte. The solid electrolyte may include, for example, boron oxide or lithium oxynitride, but embodiments of the present disclosure are not limited thereto. Any material may be utilized as long as the material is utilized as a solid electrolyte in the art. In some embodiments, the solid electrolyte may be formed on the negative electrode, for example, through sputtering, or a separate solid electrolyte sheet may be stacked on the negative electrode. The solid electrolyte may be, for example, an oxide-based solid electrolyte or a sulfide-based solid electrolyte.

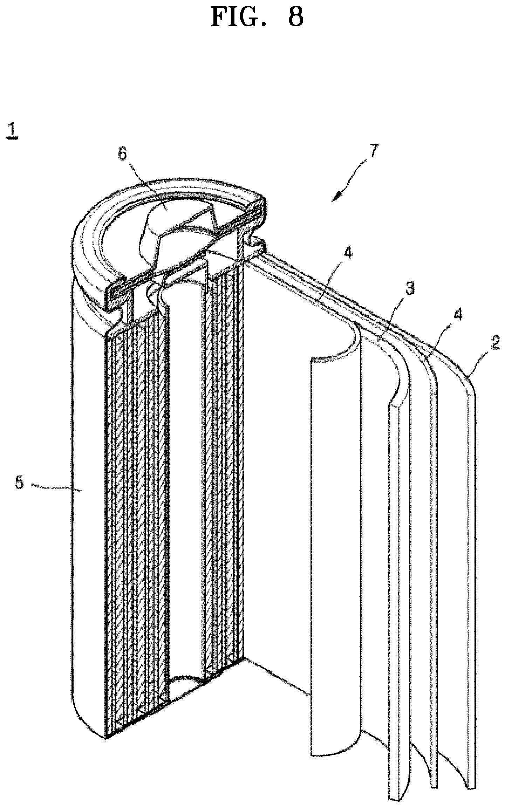

Referring to FIG. 8, a lithium battery 1 according to one or more embodiments may include a positive electrode 3, a negative electrode 2, and a separator 4. The positive electrode 3, the negative electrode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but embodiments of the present disclosure are not necessarily limited to such a shape. For example, in some embodiments, the battery case 5 may have a prismatic shape, a thin film shape, and/or the like.

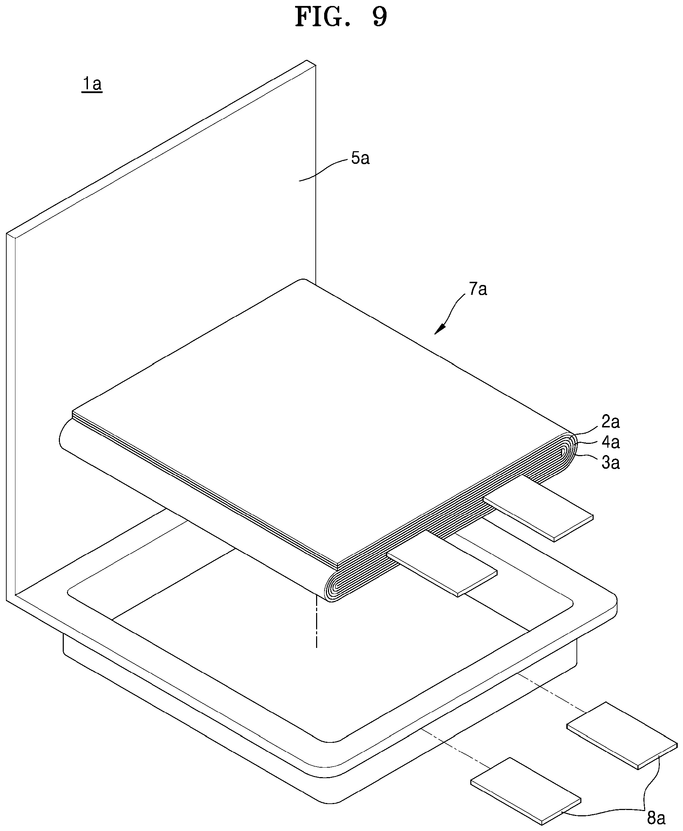

Referring to FIG. 9, a lithium battery 1a according to one or more embodiments may include a positive electrode 3a, a negative electrode 2a, and a separator 4a. The separator 4a may be between the positive electrode 3a and the negative electrode 2a, and the positive electrode 3a, the negative electrode 2a, and the separator 4a may be wound or folded to form a battery structure 7a. The formed battery structure 7a may be accommodated in a battery case 5a. The lithium battery 1a may include an electrode tab 8a serving as an electrical path for guiding a current formed in the battery structure 7a to the outside. An organic electrolyte may be injected into the battery case 5a, and the battery case 5a may be sealed to complete the lithium battery 1a. The battery case 5a may have a prismatic shape, but embodiments of the present disclosure are not necessarily limited to such a shape. For example, in some embodiments, the battery case 5a may have a cylindrical shape, a thin film shape, and/or the like.

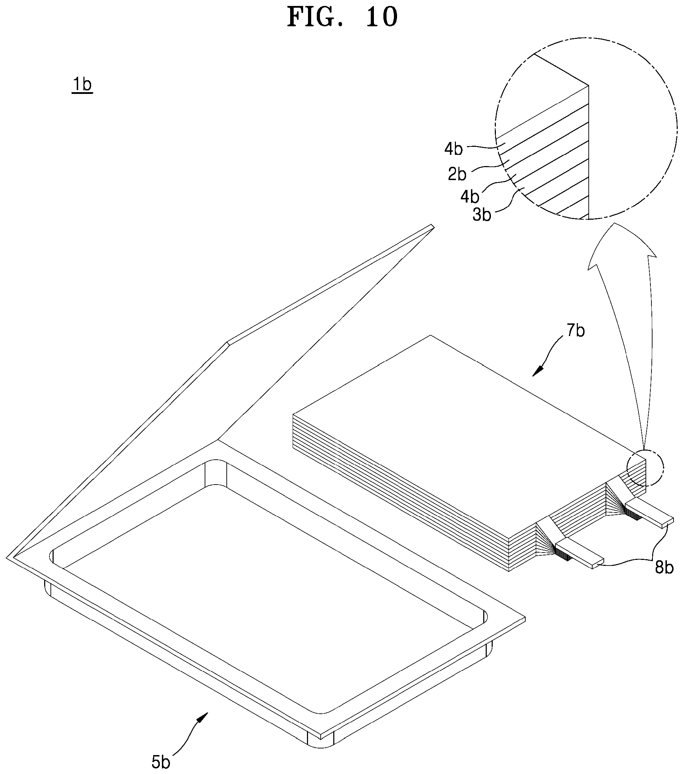

Referring to FIG. 10, a lithium battery 1b according to one or more embodiments may include a positive electrode 3b, a negative electrode 2b, and a separator 4b. The separator 4b may be between the positive electrode 3b and the negative electrode 2b to form a battery structure 7b. The battery structure 7a may be stacked in a bi-cell structure and then accommodated in a battery case 5b. The lithium battery 1b may include an electrode tab 8b serving as an electrical path for guiding a current formed in the battery structure 7b to the outside. An organic electrolyte may be injected into the battery case 5b, and the battery case 5b may be sealed to complete the lithium battery 1b. The battery case 5b may have a prismatic shape, but embodiments of the present disclosure are not necessarily limited to such a shape. For example, in some embodiments, the battery case 5b may have a cylindrical shape, a thin film shape, and/or the like.

A pouch-type or kind lithium battery corresponds to an embodiment in which a pouch is utilized as a battery case in the lithium batteries of FIGs. 8 to 10. The pouch-type or kind lithium battery may include one or more battery structures. A separator may be disposed between a positive electrode and a negative electrode to form the battery structure. After the battery structure is stacked in a bi-cell structure, the battery structure may be impregnated in an organic electrolyte, accommodated in a pouch, and sealed to complete the pouch-type or kind lithium battery. For example, in one or more embodiments, the above-described positive electrode, negative electrode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

The lithium battery according to the present disclosure may have excellent or suitable lifespan characteristics and high rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in one or more electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptop computers, smartphones, electric vehicles, and/or the like. A battery module may include, for example, a plurality of batteries and a frame for holding the plurality of batteries. A battery pack may include, for example, a plurality of battery modules and a bus bar for connecting the plurality of battery modules. The battery module and/or the battery pack may further include a cooling device. A plurality of battery packs may be controlled or selected by a battery management system. The battery management system may include a battery pack and a battery controller connected to the battery pack.

Hereinafter, the disclosure will be described in more detail through the following Examples and Comparative Examples. However, the following Examples and Comparative Examples are merely presented to exemplify the disclosure, and the scope of the present disclosure is not limited thereto.

**Manufacturing of lithium battery (half-cell)**

**Example 1: Dry positive electrode film with MDS/TDS of 5, single-sided electrode Dry electrode film**

$LiNi_{0.91}Co_{0.05}Al_{0.04}O_2$ (hereinafter referred to as NCA91) having an average particle diameter (D50) of 15 $\mu$m as a dry positive electrode active material, a carbon conductive material (Denka black) as a dry conductive material, and PTFE as a dry binder were put into a blade mixer in a weight ratio of 96:1.8:2.2 and then primarily dry-mixed at a speed of 1,000 rpm at a temperature of 100 °C for 10 minutes to prepare a first mixture in which a positive electrode active material, a conductive material, and a binder were uniformly mixed.

Subsequently, in order for the dry binder to be fibrillized, the first mixture was further secondarily mixed at a speed of 5,000 rpm at a temperature of 25 °C for 20 minutes to prepare a second mixture. A separate solvent was not utilized during preparation of the first mixture and the second mixture. The prepared second mixture was put into an extruder and extruded to prepare a positive electrode active material layer having a form of a sheet. Pressure during extrusion was about 50 MPa. An extrusion direction corresponds to an MD.

A prepared positive electrode active material layer sheet was rolled to prepare a dry positive electrode film. The dry positive electrode film is a self-standing film. Pressure during rolling was about 3 ton/cm$^2$.

A ratio MDS/TDS of MD tensile strength MDS to TD tensile strength TDS of the self-standing film of the positive electrode active material layer was 5.

**Preparation of first stack**

A first stack was prepared in which a carbon layer as an interlayer was disposed on one surface of an aluminium thin film positive electrode current collector having a thickness of 12 $\mu$m.

A length of the carbon layer was equal to a length of a positive electrode current collector in an MD. A width of the carbon layer was 90 % of a length of the positive electrode current collector in a TD. The carbon layer was disposed at a central portion of the positive electrode current collector to be spaced apart from each of both (e.g., simultaneously) ends of the positive electrode current collector in the TD by 5 % of the total length of positive electrode current collector in the TD.

A composition including a carbon conductive material (Denka black) and PVDF was applied on an aluminium thin film and then dried to prepare the carbon layer. The carbon layer disposed on one surface of the aluminium thin film had a thickness of about 1 $\mu$m.

**Preparation of second stack and dry positive electrode**

A second stack was prepared by arranging a dry positive electrode film on one surface of the first stack on which the carbon layer was disposed. The dry positive electrode film has a thickness of 100 $\mu$m.

An area of the dry positive electrode film was equal to that of the positive electrode current collector. The dry positive electrode film included a first region disposed on the carbon layer and a second region disposed on the positive electrode current collector. The second region was disposed to extend from the first region beyond an outer periphery of the carbon layer.

A cut line was introduced onto the dry positive electrode film by cutting a portion of the dry positive electrode film along a boundary between the first region and the second region from a side surface of one end portion of the dry positive electrode film in a length direction.

At one end portion of the dry positive electrode film in the length direction, the second region of the dry positive electrode film was bent at an angle of 180 degrees and then pulled along the cut line of the dry positive electrode film in the length direction.

The second region of the dry positive electrode film disposed on the positive electrode current collector was completely removed by separating the second region from the first region of the dry positive electrode film from one end portion to the other end portion of the dry positive electrode film in the length direction. A dry positive electrode was prepared in which the dry positive electrode active material layer was disposed only on the carbon layer and was absent on the positive electrode current collector.

There was no damage to the positive electrode current collector in a process of removing the second region of the dry positive electrode film. Burrs or depressions disposed adjacent to an outer periphery of the dry positive electrode active material layer were absent.

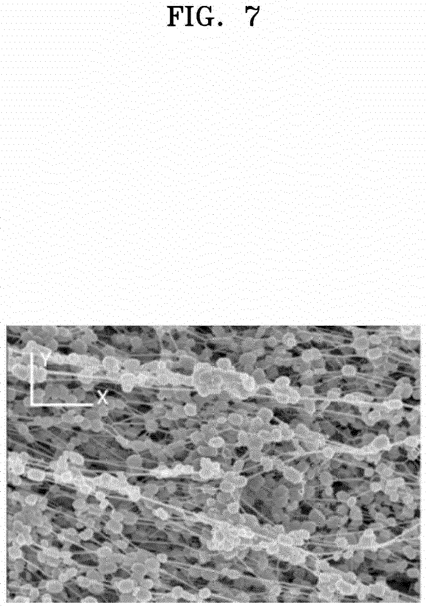

A scanning electron microscope image of a cut surface of the dry positive electrode active material layer after the removal of the second region of the dry positive electrode film is shown in FIG. 7. As shown in FIG. 7, it was confirmed that a fibrillized binder was disposed in a length direction (horizontal direction or X-axis direction in the drawing) of the dry positive electrode active material layer.

**Manufacturing of coin cell**

By utilizing the dry positive electrode prepared above, a lithium metal was utilized as a counter electrode, and a solution, in which a PTFE separator and 1.3 M $LiPF_6$ were dissolved in EC+ethyl methyl carbonate (EMC)+DMC (volume ratio of 3:4:3), was utilized as an electrolyte to manufacture a coin cell.

**Example 2: Dry positive electrode film with MDS/TDS of 10, single-sided electrode**

A dry positive electrode and a lithium battery were manufactured in substantially the same manner as in Example 1, except that, by adjusting extrusion conditions, such as extrusion pressure, extrusion temperature or a combination thereof, a ratio MDS/TDS of MD tensile strength MDS to TD tensile strength TDS of a dry positive electrode film was changed into 10.

**Example 3: Dry positive electrode film with MDS/TDS of 15, single-sided electrode**

A dry positive electrode and a lithium battery were manufactured in substantially the same manner as in Example 1, except that, by adjusting extrusion conditions, such as extrusion pressure, extrusion temperature or a combination thereof, a ratio MDS/TDS of MD tensile strength MDS to TD tensile strength TDS of a dry positive electrode film was changed into 15.

**Example 4: Dry positive electrode film with MDS/TDS of 20, single-sided electrode**

A dry positive electrode and a lithium battery were manufactured in substantially the same manner as in Example 1, except that, by adjusting extrusion conditions, such as extrusion pressure, extrusion temperature or a combination thereof, a ratio MDS/TDS of MD tensile strength MDS to TD tensile strength TDS of a dry positive electrode film was changed into 20.

**Example 5: Dry positive electrode film with MDS/TDS of 5, double-sided electrode**

**Preparation of dry electrode film**

A dry positive electrode film was prepared in substantially the same manner as in Example 1.

**Preparation of first stack**

A first stack was prepared in which a carbon layer as an interlayer was disposed on two opposite surfaces of an aluminium thin film positive electrode current collector having a thickness of 60 μm.

The carbon layer was disposed in substantially the same manner as in Example 1, except that an area of the carbon layer on each of two opposite surfaces of the first stack was the same as an area of a positive electrode current collector.

**Preparation of second stack and dry positive electrode**

A second stack was prepared by arranging a dry positive electrode film on each of two opposite surfaces of the first stack.

A length of the dry positive electrode film in an MD was equal to a length of the first stack in an MD. A length of the dry positive electrode film in a TD corresponded to 120 % of a length of the first stack in a TD. Two dry positive electrode films were in direct contact with each other in a region beyond both (e.g., simultaneously) ends of the first stack in the TD. The dry positive electrode film included a first region disposed on the interlayer and a second region extending from the first region beyond an outer periphery of the interlayer. The first region of the dry positive electrode film was in contact with the interlayer, and the second region of the dry positive electrode film was not in contact with the interlayer. A thickness of the dry positive electrode film disposed on one surface of the positive electrode current collector was about 100 $\mu$m.

A cut line was introduced onto the dry positive electrode film by cutting a portion of the dry positive electrode film along a boundary between the first region and the second region from a side surface of one end portion of the dry positive electrode film in a length direction.

At one end portion of the dry positive electrode film in the length direction, the second region of the dry positive electrode film was bent at an angle of 180 degrees and then pulled along the cut line of the dry positive electrode film in the length direction.

The second region of the dry positive electrode film was completely removed by separating the second region from the first region of the dry positive electrode film from one end portion to the other end portion of the dry positive electrode film in the length direction. A dry positive electrode was prepared in which a dry positive electrode active material layer is disposed only on the first stack.

There was no damage to the positive electrode current collector in a process of removing the second region of the dry positive electrode film. Burrs or depressions disposed adjacent to the outer periphery of the dry positive electrode active material layer were absent.

**Manufacturing of coin cell**

By utilizing the dry positive electrode prepared above, a lithium metal was utilized as a counter electrode, and a solution, in which a PTFE separator and 1.3 M LiPF$_6$ were dissolved in EC+EMC+DMC (volume ratio of 3:4:3), was utilized as an electrolyte to manufacture a coin cell.

**Comparative Example 1: Wet positive electrode**

**Preparation of wet positive electrode**

A mixture, in which LiNi$_{0.91}$Co$_{0.05}$Al$_{0.04}$O$_2$ (hereinafter referred to as NCA91) with an average particle diameter (D50) of 15 $\mu$m as a positive electrode active material, a carbon conductive material (Denka black) as a conductive material, and PTFE as a binder were mixed in a weight ratio of 96:1.8:2.2, was mixed with NMP in a mortar and pestle to prepare a slurry for forming a positive electrode active material layer. The slurry was applied on one surface of an aluminium foil positive electrode current collector having a thickness of 12 $\mu$m through bar coating, dried at room temperature, and then dried again under conditions of vacuum and a temperature 120 °C to introduce a wet positive electrode active material layer, thereby preparing a stack. The prepared stack was rolled to prepare a wet positive electrode. Pressure during rolling was 3.0 ton/cm$^2$. A thickness of the wet positive electrode active material layer of the wet positive electrode of Comparative Example 1 was equal to a thickness of the positive electrode active material layer of the dry positive electrode of Example 1.

A cut line was introduced onto the wet positive electrode active material layer from a side surface of one end portion of the wet positive electrode in a length direction to be disposed as the same position as the dry positive electrode and have the same shape as the dry positive electrode. With respect to the cut line, a central portion of the wet positive electrode in a TD was defined as a first region, and an end portion of the wet positive electrode in the TD was defined as a second region. At one end portion of the wet positive electrode in the length direction, the second region of the wet positive electrode layer was bent at an angle of 180 degrees and then pulled along the cut line of the wet positive electrode in the length direction.

Because the wet positive electrode active material layer prepared in a wet type or kind was hard, cracks occurred in the wet positive electrode active material layer during a process of separating the second region, which made it impossible to apply the dry positive electrode as a positive electrode.

Therefore, for a charge/discharge test, a wet positive electrode was prepared by separating the second region from the first region of the wet positive electrode active material layer utilizing a laser cutter.

**Manufacturing of coin cell**

A lithium battery was manufactured in substantially the same manner as in Example 1, except that the wet positive electrode was utilized instead of a dry positive electrode.

**Comparative Example 2: Electrode free of interlayer**

A dry positive electrode was prepared in substantially the same manner as in Example 1, except that an aluminium thin film having a thickness of 12 $\mu$m without a carbon layer as an interlayer was utilized as a positive electrode current collector.

A cut line was introduced onto a dry positive electrode active material layer from a side surface of one end portion of the dry positive electrode in a length direction to be disposed as the same position as the dry positive electrode of Example 1 and have the same shape as the dry positive electrode. With respect to the cut line, a central portion of the dry positive electrode in a TD was defined as a first region, and an end portion of the dry positive electrode in the TD was defined as a second region. At one end portion of the dry positive electrode in the length direction, the second region of the dry positive electrode layer was bent at an angle of 180 degrees and then pulled along the cut line of the dry positive electrode in the length direction. In a process of pulling the second region, the first region was also peeled off of the dry positive electrode current collector.

**Manufacturing of coin cell**

Because the dry positive electrode active material layer was present in a state of being peeled off of the positive electrode current collector, it was impossible to manufacture a coin cell.

**Comparative Example 3: Laser punching**

A dry electrode film and a positive electrode current collector/interlayer stack were prepared in substantially the same manner as in Example 1.

**Dry electrode**

A dry positive electrode was prepared in substantially the same manner as in Example 1, except that a second region was separated from a first region of a dry positive electrode active material layer along a boundary between the first region and the second region from a side surface of one end portion of the dry positive electrode in a length direction utilizing a laser cutter. In a process of removing the second region of the dry positive electrode active material layer, a positive electrode current collector was damaged by a laser. Burrs and/or depressions disposed adjacent to an outer periphery of the dry positive electrode active material layer were formed.

**Comparative Example 4: Laser punching**

A dry electrode film and a positive electrode current collector/interlayer stack were prepared in substantially the same manner as in Example 5.

**Dry electrode**

A dry positive electrode was prepared in substantially the same manner as in Example 5, except that a second region was separated from a first region of a dry positive electrode active material layer along a boundary between the first region and the second region from a side surface of one end portion of the dry positive electrode in a length direction utilizing a laser cutter. In a process of removing the second region of the dry positive electrode active material layer, a positive electrode current collector was damaged by a laser. Burrs and/or depressions disposed adjacent to an outer periphery of the dry positive electrode active material layer were formed.

**Evaluation Example 1: Measurement of tensile strength**

In a stress-strain curve obtained by stretching each of samples of the dry positive electrode films prepared in Examples 1 to 4 and a sample of the wet positive electrode active material layer separated from the electrode current collector in the wet positive electrode prepared in Comparative Example 1 at a speed of 5 mm/min in a MD and a TD utilizing a texture analyzer (TA.XT plus manufactured by Stable Micro Systems), MD tensile strength MDS and TD tensile strength TDS, which were the largest stresses among the stresses applied until the sample is fractured, were each measured. Some of ratios MDS/TDS thereof are shown in Table 1.

In addition, in the dry positive electrodes prepared in Examples 1 to 4 and the wet positive electrode prepared in Comparative Example 1, an area of the second region remaining after separation of the second region was measured and shown in Table 1.

[Table 1]

|  | Ratio MDS/TDS of positive electrode film | Residual ratio of second region of positive electrode |
|---|---|---|
| Example 1 | 5 | -5 % |
| Example 2 | 10 | 0 % |
| Example 3 | 15 | 2 % |
| Example 4 | 20 | 5 % |
| Comparative Example 1 | ~ 1 | - |

As shown in Table 1, a ratio MDS/TDS ratio of the dry electrode films of Examples 1 to 4 was greater than 2, but a ratio MDS/TDS of the wet electrode active material layer of Comparative Example 1 was less than 2. As shown in Table 1, in the dry positive electrodes of Examples 1 to 3, an area of the second region remaining to be connected to the electrode active material layer (first region) after separation of the second region is less than 5 % of the total area of the second region, which was insignificant, and thus it was confirmed that the second region was simply and effectively removed. In the dry positive electrode of Example 4, the second region was completely separated, and about 5 % of the dry electrode active material layer (first region) was additionally separated.

In contrast, in the wet positive electrode of Comparative Example 1, because the prepared wet positive electrode active material layer was hard, cracks occurred in the wet positive electrode active material layer during a process of separating the second region, which made it impossible to apply the wet positive electrode as a positive electrode.

**Evaluation Example 2: Evaluation of vertical binding force of positive electrode active material layer (I)**

By utilizing SAICAS (SAICAS EN-EX manufactured by Dipla Wintes Co., Ltd., in JAPAN), binding characteristics of the positive electrode active material layers included in the positive electrodes prepared in Example 1 and Comparative Example 1 were analyzed.

By utilizing a diamond blade with a width of 1 mm, under conditions of a clearance angle of 10°, a rake angle of 20°, a shear angle of 45°, a horizontal velocity of 4 $\mu$m/s, and a vertical velocity of 0.4 $\mu$m/s, a constant velocity analysis was performed to measure a vertical binding force $F_V$ according to a depth.

First, a first constant velocity analysis was performed from a first position on a surface of the positive electrode active material layer included in the first region to a surface of the positive electrode current collector, and a blade was horizontally moved along the surface of the positive electrode current collector to remove the positive electrode active material layer. Then, at a position of 10 $\mu$m behind the first position, a second constant velocity analysis was performed under the same conditions as the first constant velocity analysis. Data measured in the second constant velocity analysis was utilized.

In the positive electrode active material layer, a vertical binding force of the positive electrode active material layer was measured, and measured data was normalized to a binding force graph area to derive a vertical relative binding force $F_{VR}$ according to a depth of the positive electrode active material layer.

The vertical binding force $F_{VR}$ of the positive electrode active material layer is derived utilizing data measured in a section from a first point spaced apart from the surface of the positive electrode active material layer by 5 % of the total thickness of the positive electrode active material layer to a second point spaced apart from the surface of the electrode current collector by 5 % of the total thickness of the positive electrode active material layer. For example, data near the surface of the positive electrode active material layer and data near the surface of the electrode current collector were excluded to prevent or reduce measurement errors.

A change ratio of the vertical relative binding force $F_{VR}$ was calculated utilizing Equation 1 from data about the derived vertical relative binding force $F_{VR}$ of the positive electrode active material layer. Some of results are shown in Table 2.

change ratio of vertical relative binding force $F_{VR}$ = [(maximum value of vertical relative binding force - minimum value of vertical relative binding force)/minimum value of vertical relative binding force] $\times$ 100        Equation 1

[Table 2]

|  | Change ratio [%] of vertical relative binding force |
| --- | --- |
| Comparative Example 1 | 1718 |
| Example 1 | 95 |

As shown in Table 2, a change ratio of a vertical relative binding force of the positive electrode active material layer included in the positive electrode of Example 1 was 300 % or less.

Therefore, it was confirmed that the positive electrode active material layer had substantially uniform binding force and composition distribution irrespective of a position in a thickness direction.

In contrast, the positive electrode active material layer included in the positive electrode of Comparative Example 1 had a change of a vertical binding force greater than 300 %.

Therefore, it was confirmed that the positive electrode active material layer included in the positive electrode of Comparative Example 1 had significantly changed binding force and composition distribution according to a position in a thickness direction.

**Evaluation Example 3: Evaluation of horizontal binding force of positive electrode active material layer (II)**

By utilizing SAICAS (SAICAS EN-EX manufactured by Dipla Wintes Co., Ltd., in JAPAN), binding characteristics of the positive electrode active material layers included in the positive electrodes prepared in Example 1 and Comparative Example 1 were analyzed.

By utilizing a diamond blade with a width of 1 mm, under conditions of a clearance angle of 10°, a rake angle of 20°, a shear angle of 45°, a horizontal velocity of 4 $\mu$m/s, and a vertical velocity of 0.4 $\mu$m/s, a constant velocity analysis was performed to measure a horizontal binding force $F_H$ according to a depth.

First, a first constant velocity analysis was performed from a first position on a surface of the positive electrode active material layer included in the first region to a surface of the positive electrode current collector, and a blade was horizontally moved along the surface of the positive electrode current collector to remove the positive electrode active material layer. Then, at a position of 10 $\mu$m behind the first position, a second constant velocity analysis was performed under the same conditions as the first constant velocity analysis. Data measured in the second constant velocity analysis was utilized.

A first horizontal binding force $F_{H1}$ at a first point spaced apart from the surface of the positive electrode active material layer by 10 % of the total thickness of the positive electrode active material layer and a second horizontal binding force $F_{H2}$ at a second point spaced apart from the surface of the electrode current collector by 10 % of the total thickness of the positive electrode active material layer were measured. Some of results of evaluating the horizontal binding force $F_H$ are shown in Table 3. A horizontal binding force ratio between the first point and the second point is defined by Equation 2.

## Equation 2

horizontal binding force ratio (%) between first point and second point = [$F_{H2}/F_{H1}$] × 100

[Table 3]

|  | Horizontal relative binding force ratio [%] |
| --- | --- |
| Comparative Example 1 | 45 |
| Example 1 | 75 |

As shown in Table 3, the positive electrode active material layer of Example 1 had an increased horizontal binding force ratio as compared with the positive electrode active material layer of Comparative Example 1.

Therefore, it was confirmed that the positive electrode active material layer of Example 1 had more substantially uniform binding force and composition distribution than the positive electrode active material layer of Comparative Example 1.

**Evaluation Example 4: Evaluation of charge/discharge characteristics at room temperature**

The lithium batteries manufactured in Examples 1 to 4 and Comparative Example 1 were each charged at a constant current rate of 0.1 C at a temperature of 25 °C until a voltage reached 4.4 V (vs. Li), and then, in a constant voltage mode, while 4.4 V was maintained, the charging was cut off at a current rate of 0.05 C. Subsequently, the lithium secondary batteries were each discharged at a constant current rate of 0.1 C until the voltage reached 2.8 V (vs. Li) during discharging (formation cycle).

The lithium batteries subjected to the formation cycle were each charged at a constant current rate of 0.5 C at a temperature of 25 °C until the voltage reached 4.4V (vs. Li). Subsequently, the lithium secondary batteries were each discharged at a constant current rate of 0.5 C until the voltage reached 2.8 V (vs. Li) during discharging. Such a cycle was repeated up to a 100th cycle (100 times).

The lithium batteries were each rested for 10 minutes after every charging/discharging cycle. Some of charging/discharging test results at room temperature are shown in Table 4. A capacity retention ratio at a 100th cycle is defined by Equation 3.

capacity retention ratio (%) = [discharge capacity at 100th cycle/discharge capacity at 1st cycle] $\times$ 100          Equation 3

[Table 4]

|  | Electrode type or kind | Ratio MDS/TDS | Capacity retention ratio [%] |
|---|---|---|---|
| Example 1 | Dry type or kind | 5 | 95 |
| Example 2 | Dry type or kind | 10 | 96.5 |
| Example 3 | Dry type or kind | 15 | 96 |
| Example 4 | Dry type or kind | 20 | 95 |
| Comparative Example 1 | Wet type or kind | ~ 1 | 92 |

As shown in Table 4, the lifespan characteristics at room temperature of each of the lithium batteries of Examples 1 to 4 were improved as compared with the lithium battery of Comparative Example 1.

The lithium battery provided with the wet electrode of Comparative Example 1 had degraded lifespan characteristics as compared with the lithium battery provided with the dry electrode of Examples 1 to 4.

The wet electrode of Comparative Example 1 was determined to have degraded lifespan characteristics due to an increase in side reaction due to burrs and/or depressions of the electrode current collector formed adjacent to the outer periphery of the positive electrode active material layer by laser cutting.

According to one or more embodiments of the present disclosure, there may be provided an electrode active material layer having one or more suitable forms without damage to an electrode current collector during a process of preparing a dry electrode by selectively removing a portion of the electrode active material layer utilizing a difference in tensile strength according to a direction of the electrode active material layer.

According to one or more embodiments of the present disclosure, an interlayer may be disposed between an electrode current collector and an electrode active material layer, thereby easily adjusting the position and shape of the electrode active material layer introduced on the electrode current collector.

According to one or more embodiments of the present disclosure, an interlayer may be disposed between an electrode current collector and an electrode active material layer, thereby easily preventing or reducing the electrode active material from being separated from the electrode current collector.

As utilized herein, the singular forms "a," "an," and "the" are intended to include the plural forms as well, unless the context clearly indicates otherwise. Further, the utilization of "may" when describing embodiments of the present disclosure may refer to "one or more embodiments of the present disclosure".

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the present disclosure, when particles are spherical, "size" or "diameter" indicates a particle diameter or an average particle diameter, and when the particles are non-spherical, the "size" or "diameter" indicates a major axis length or an average major axis length. That is, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by the following claims and equivalents thereof.

## Claims

1. A method of preparing a dry electrode, the method comprising:

   arranging at least one interlayer on at least one surface of an electrode current collector to prepare a first stack;
   arranging a dry electrode film, which has an area larger than an area of the at least one interlayer, on the first stack to prepare a second stack, wherein the dry electrode film comprises a first region on the at least one interlayer and a second region extending from the first region beyond an outer periphery of the at least one interlayer; and
   pulling at least a portion of the second region of the dry electrode film to separate the second region from the first region and provide the dry electrode,
   wherein the dry electrode film has anisotropic tensile strength, and
   wherein the dry electrode comprises a dry electrode active material layer on the at least one interlayer, and in the dry electrode, the dry electrode active material layer directly on the electrode current collector is absent.

2. The method of claim 1, wherein the second region abuts the first region in a machine direction (MD) of the dry electrode film.

3. The method of claim 1 or claim 2, wherein a MD tensile strength (MDS) of the dry electrode film is different from a transverse direction (TD) tensile strength (TDS) of the dry electrode film, and
   a ratio (MDS/TDS) of the MD tensile strength (MDS) to the TD strength (TDS) of the dry electrode film is 2 or more;
   optionally wherein a ratio (MDS/TDS) of the MD tensile strength (MDS) to the TD tensile strength (TDS) of the dry electrode film is in a range of about 5 to about 20.

4. The method of any one of claims 1 to 3, wherein the second region abuts the first region along the outer periphery of the at least one interlayer.

5. The method of any one of claims 1 to 4, wherein the dry electrode film further comprises a cut line along at least a portion of a boundary between the first region and the second region.

6. The method of claim 5, wherein:

   (i) in the dry electrode film, the cut line is along a portion or an entirety of the outer periphery of the interlayer; and/or
   (ii) a length of the cut line is 5 % or less of a total length of the boundary between the first region and the second region.

7. The method of any one of claims 1 to 6, wherein the dry electrode film has a first area (S1), and the at least one interlayer has a second area (S2), wherein a ratio (S2/S1) of the second area (S2) to the first area (S1) is about 0.5 to about 0.99; and
   the electrode current collector has a third area (S3), and the at least one interlayer has the second area (S2), wherein a ratio (S2/S3) of the second area (S2) to the third area (S3) is in a range of about 0.5 to about 0.99.

8. The method of any one of claims 1 to 7, wherein:

   the dry electrode comprises a plurality of dry electrode active material layers which are identical to the dry electrode active material layer and are on the at least one surface of the electrode current collector to be spaced apart from each other in a transverse direction (TD) of the electrode current collector;
   each of the plurality of dry electrode active material layers has a first machine direction (MD) length (MDL1) and a first TD length (TDL1), and the electrode current collector has a second MD length (MDL2) and a second TD length (TDL2);
   a ratio (MDL1/TDL1) of the first MD length (MDL1) of the dry electrode active material layer to the first TD length (TDL1) of the dry electrode active material layer is 20 or more;
   a ratio (TDL1/TDL2) of the first TD length (TLD1) of the dry electrode active material layer to the second TD length (TDL2) of the electrode current collector is 0.3 or less;
   each of the plurality of dry electrode active material layers has first MD tensile strength (MDS1) and first TD tensile strength (TDS1); and
   a ratio (MDS1/TDS1) of the first MD tensile strength (MDS1) to the first TD tensile strength (TDS1) is 2 or more.

9. The method of any one of claims 1 to 7, wherein the dry electrode comprises the dry electrode active material layer on the at least one surface of the electrode current collector along a machine direction (MD) of the electrode current collector,

   the dry electrode active material layer has a third MD length (MDL3) and a third transverse direction (TD) length (TDL3), the electrode current collector has a fourth MD length (MDL4) and a fourth TD length (TDL4),
   both ends of the dry electrode active material layer in a transverse direction (TD) are spaced apart from both ends of the electrode current collector in the TD, respectively,
   the third TD length (TDL3) of the dry electrode active material layer is in a range of about 60 % to about 99 % of the fourth TD length (TDL4) of the electrode current collector, and
   the dry electrode active material layer has first MD tensile strength (MDS1) and first TD tensile strength (TDS1), wherein a ratio (MDS1/TDS1) of the first MD tensile strength (MDS1) to the first tensile TD strength (TDS1) is 2 or more.

10. The method of any one of claims 1 to 7, wherein the dry electrode comprises the dry electrode active material layer on the at least one surface of the electrode current collector in a machine direction (MD) of the electrode current collector,

    the dry electrode active material layer has a fifth MD length (MDL5) and a fifth transverse direction (TD) length (TDL5), the electrode current collector has a sixth MD length (MDL6) and a sixth TD length (TDL6),
    the fifth TD length (TDL5) of the dry electrode active material layer is in a range of about 99 % to about 101 % of the sixth TD length (TDL6) of the electrode current collector, and
    the dry electrode active material layer has first MD tensile strength (MDS1) and first TD tensile strength (TDS1), wherein a ratio (MDS1/TDS1) of the first MD tensile strength (MDS1) to the first tensile TD strength (TDS1) is 2 or more.

11. The method of any one of claims 1 to 7, wherein:

the dry electrode comprises a plurality of dry electrode active material layers which are identical to the dry electrode active material layer and are on the at least one surface of the electrode current collector to be spaced apart from each other in a machine direction (MD) of the electrode current collector;
the plurality of dry electrode active material layers have a patterned arrangement, and each of the plurality of dry electrode active material layers is spaced apart from each of both ends of the electrode current collector in the MD and both ends of the electrode current collector in a transverse direction (TD);
each of the plurality of dry electrode active material layers has a seventh MD length (MDL7) and a seventh TD length (TDL7), and the electrode current collector has an eighth MD length (MDL8) and an eighth TD length (TDL8);
a ratio (MDL7/TDL7) of the seventh MD length (MDL7) of the dry electrode active material layer to the seventh TD length (TDL7) of the dry electrode active material layer is 5 or less, and the seventh TD length (TDL7) of the dry electrode active material layer is in a range of about 60 % to about 99 % of the eighth TD length (TDL8) of the electrode current collector; and
the dry electrode active material layer has first MD tensile strength (MDS1) and first TD tensile strength (TDS1), wherein a ratio (MDS1/TDS1) of the first MD tensile strength (MDS1) to the first tensile TD strength (TDS1) is in a range of about 5 to about 20;
optionally wherein the patterned arrangement comprises a box pattern arrangement, an annular pattern arrangement, a serpentine pattern arrangement, or a combination thereof.

12. The method of any one of claims 1 to 11, wherein the dry electrode film is a self-standing film, is free of a residual process solvent, and comprises a dry electrode active material and a dry binder, the dry binder comprises a fibrillized binder and comprises a fluorine-based binder,

the dry electrode film further comprises a dry conductive material, and
the dry conductive material comprises a carbon-based conductive material.

13. The method of any one of claims 1 to 12, wherein:

(i) a thickness of the at least one interlayer is 30 % or less of a thickness of the electrode current collector,

the interlayer comprises a binder, and
the binder comprises at least one selected from a conductive binder and a nonconductive binder and comprises a fluorine-based binder; and/or

(ii) the at least one interlayer further comprises a carbon-based conductive material.

14. The method of any one of claims 1 to 13, wherein one surface of the electrode current collector adjacent to one side surface of the dry electrode active material layer and not covered by the at least one interlayer is free of burrs and/or depressions.

15. The method of any one of claims 1 to 14, wherein:

(i) when the dry electrode active material layer is measured utilizing a surface and interfacial measuring analysis system (SICAS), a change ratio of a vertical relative binding force ($F_{VR}$) according to a depth from a first point spaced apart from a surface of the dry electrode active material layer by about 5 % of a total thickness of the dry electrode active material layer in a direction of the electrode current collector to a second point spaced apart from a surface of the electrode current collector by about 5 % of the total thickness of the dry electrode active material layer is 300 % or less; and/or
(ii) when the dry electrode active material layer is measured utilizing a surface and interfacial measuring analysis system (SICAS), a horizontal binding force ratio of a first horizontal binding force ($F_{HA1}$) at a first point spaced apart from a surface of the dry electrode active material layer by about 10 % of a total thickness of the dry electrode active material layer in a direction of the electrode current collector to a second horizontal binding force ($F_{HA2}$) at a second point spaced apart from a surface of the electrode current collector by about 10 % of the total thickness of the dry electrode active material layer is 50 % or more.

**Patentansprüche**

1. Verfahren zur Herstellung einer Trockenelektrode, wobei das Verfahren umfasst:

    Anordnen mindestens einer Zwischenschicht auf mindestens einer Oberfläche eines Elektrodenstromkollektors, um einen ersten Stapel vorzubereiten;
    Anordnen eines Trockenelektrodenfilms, der eine Fläche aufweist, die größer ist als eine Fläche der mindestens einen Zwischenschicht, auf dem ersten Stapel, um einen zweiten Stapel vorzubereiten, wobei der Trockenelektrodenfilm einen ersten Bereich auf der mindestens einen Zwischenschicht und einen zweiten Bereich umfasst, der sich von dem ersten Bereich über einen Außenumfang der mindestens einen Zwischenschicht hinaus erstreckt; und
    Ziehen zumindest eines Abschnitts des zweiten Bereichs des Trockenelektrodenfilms, um den zweiten Bereich vom ersten Bereich zu trennen und die Trockenelektrode bereitzustellen,
    wobei der Trockenelektrodenfilm eine anisotrope Zugfestigkeit aufweist und
    wobei die Trockenelektrode eine Trockenelektroden-Aktivmaterialschicht auf der mindestens einen Zwischenschicht umfasst und in der Trockenelektrode die Trockenelektroden-Aktivmaterialschicht direkt auf dem Elektrodenstromkollektor fehlt.

2. Verfahren nach Anspruch 1, wobei der zweite Bereich in Maschinenrichtung (MD) des Trockenelektrodenfilms an den ersten Bereich anliegt.

3. Verfahren nach Anspruch 1 oder Anspruch 2, wobei sich die MD-Zugfestigkeit (MDS) des Trockenelektrodenfilms von der Zugfestigkeit (TDS) des Trockenelektrodenfilms in Querrichtung (TD) unterscheidet und
    ein Verhältnis (MDS/TDS) der MD-Zugfestigkeit (MDS) zur TD-Festigkeit (TDS) des Trockenelektrodenfilms 2 oder mehr beträgt; wobei ein Verhältnis (MDS/TDS) der MD-Zugfestigkeit (MDS) zur TD-Zugfestigkeit (TDS) des Trockenelektrodenfilms optional in einem Bereich von etwa 5 bis etwa 20 liegt.

4. Verfahren nach einem der Ansprüche 1 bis 3, wobei der zweite Bereich entlang des Außenumfangs der mindestens einen Zwischenschicht an den ersten Bereich anliegt.

5. Verfahren nach einem der Ansprüche 1 bis 4, wobei der Trockenelektrodenfilm weiter eine Schnittlinie entlang mindestens eines Abschnitts einer Grenze zwischen dem ersten Bereich und dem zweiten Bereich umfasst.

6. Verfahren nach Anspruch 5, wobei:

    (i) im Trockenelektrodenfilm die Schnittlinie entlang eines Abschnitts oder einer gesamten Außenumfangsfläche der Zwischenschicht verläuft; und/oder
    (ii) eine Länge der Schnittlinie 5 % oder weniger einer Gesamtlänge der Grenze zwischen dem ersten Bereich und dem zweiten Bereich beträgt.

7. Verfahren nach einem der Ansprüche 1 bis 6, wobei der Trockenelektrodenfilm eine erste Fläche (S1) aufweist und die mindestens eine Zwischenschicht eine zweite Fläche (S2) aufweist, wobei ein Verhältnis (S2/S1) der zweiten Fläche (S2) zur ersten Fläche (S1) etwa 0,5 bis etwa 0,99 beträgt; und
    der Elektrodenstromkollektor eine dritte Fläche (S3) aufweist und die mindestens eine Zwischenschicht die zweite Fläche (S2) aufweist, wobei ein Verhältnis (S2/S3) der zweiten Fläche (S2) zur dritten Fläche (S3) in einem Bereich von etwa 0,5 bis etwa 0,99 liegt.

8. Verfahren nach einem der Ansprüche 1 bis 7, wobei:

    die Trockenelektrode eine Vielzahl von Trockenelektroden-Aktivmaterialschichten umfasst, die mit der Trockenelektroden-Aktivmaterialschicht identisch sind und sich auf mindestens einer Oberfläche des Elektrodenstromkollektors befinden, wobei sie in Querrichtung (TD) des Elektrodenstromkollektors voneinander beabstandet sind;
    jede der Vielzahl von Trockenelektroden-Aktivmaterialschichten eine erste Länge (MDL1) in Maschinenrichtung (MD) und eine erste TD-Länge (TDL1) aufweist, und der Elektrodenstromkollektor eine zweite MD-Länge (MDL2) und eine zweite TD-Länge (TDL2) aufweist;
    das Verhältnis (MDL1/TDL1) der ersten MD-Länge (MDL1) der Trockenelektroden-Aktivmaterialschicht zur ersten TD-Länge (TDL1) der Trockenelektroden-Aktivmaterialschicht 20 oder mehr beträgt;

ein Verhältnis (TDL1/TDL2) der ersten TD-Länge (TLD1) der Trockenelektroden-Aktivmaterialschicht zur zweiten TD-Länge (TDL2) des Elektrodenstromkollektors 0,3 oder weniger beträgt;

jede der Vielzahl von Trockenelektroden-Aktivmaterialschichten eine erste MD-Zugfestigkeit (MDS1) und eine erste TD-Zugfestigkeit (TDS1) aufweist; und

ein Verhältnis (MDS1/TDS1) der ersten MD-Zugfestigkeit (MDS1) zur ersten TD-Zugfestigkeit (TDS1) 2 oder mehr beträgt.

9. Verfahren nach einem der Ansprüche 1 bis 7, wobei die Trockenelektrode die Trockenelektroden-Aktivmaterialschicht auf mindestens einer Oberfläche des Elektrodenstromkollektors entlang einer Maschinenrichtung (MD) des Elektrodenstromkollektors umfasst,

die Trockenelektroden-Aktivmaterialschicht eine dritte MD-Länge (MDL3) und eine dritte Länge (TDL3) in Querrichtung (TD) aufweist, der Elektrodenstromkollektor eine vierte MD-Länge (MDL4) und eine vierte TD-Länge (TDL4) aufweist,

beide Enden der Trockenelektroden-Aktivmaterialschicht in Querrichtung (TD) jeweils von beiden Enden des Elektrodenstromkollektors in der TD beabstandet sind,

die dritte TD-Länge (TDL3) der Trockenelektroden-Aktivmaterialschicht in einem Bereich von etwa 60 % bis etwa 99 % der vierten TD-Länge (TDL4) des Elektrodenstromkollektors liegt, und

die Trockenelektroden-Aktivmaterialschicht eine erste MD-Zugfestigkeit (MDS1) und eine erste TD-Zugfestigkeit (TDS1) aufweist, wobei ein Verhältnis (MDS1/TDS1) der ersten MD-Zugfestigkeit (MDS1) zur ersten TD-Zugfestigkeit (TDS1) 2 oder mehr beträgt.

10. Verfahren nach einem der Ansprüche 1 bis 7, wobei die Trockenelektrode die Trockenelektroden-Aktivmaterialschicht auf mindestens einer Oberfläche des Elektrodenstromkollektors in einer Maschinenrichtung (MD) des Elektrodenstromkollektors umfasst,

die Trockenelektroden-Aktivmaterialschicht eine fünfte MD-Länge (MDL5) und eine fünfte Länge (TDL5) in Querrichtung (TD) aufweist, der Elektrodenstromkollektor eine sechste MD-Länge (MDL6) und eine sechste TD-Länge (TDL6) aufweist,

die fünfte TD-Länge (TDL5) der Trockenelektroden-Aktivmaterialschicht in einem Bereich von etwa 99 % bis etwa 101 % der sechsten TD-Länge (TDL6) des Elektrodenstromkollektors liegt, und

die Trockenelektroden-Aktivmaterialschicht eine erste MD-Zugfestigkeit (MDS1) und eine erste TD-Zugfestigkeit (TDS1) aufweist, wobei ein Verhältnis (MDS1/TDS1) der ersten MD-Zugfestigkeit (MDS1) zur ersten TD-Zugfestigkeit (TDS1) 2 oder mehr beträgt.

11. Verfahren nach einem der Ansprüche 1 bis 7, wobei:

die Trockenelektrode eine Vielzahl von Trockenelektroden-Aktivmaterialschichten umfasst, die mit der Trockenelektroden-Aktivmaterialschicht identisch sind und sich auf mindestens einer Oberfläche des Elektrodenstromkollektors befinden, um in Maschinenrichtung (MD) des Elektrodenstromkollektors voneinander beabstandet zu sein;

die Vielzahl von Trockenelektroden-Aktivmaterialschichten eine gemusterte Anordnung aufweist, und jede der Vielzahl von Trockenelektroden-Aktivmaterialschichten von jedem der beiden Enden des Elektrodenstromkollektors in MD und von beiden Enden des Elektrodenstromkollektors in einer Querrichtung (TD) beabstandet ist;

jede der Vielzahl von Trockenelektroden-Aktivmaterialschichten eine siebte MD-Länge (MDL7) und eine siebte TD-Länge (TDL7) aufweist, und der Elektrodenstromkollektor eine achte MD-Länge (MDL8) und eine achte TD-Länge (TDL8) aufweist;

ein Verhältnis (MDL7/TDL7) der siebten MD-Länge (MDL7) der Trockenelektroden-Aktivmaterialschicht zur siebten TD-Länge (TDL7) der Trockenelektroden-Aktivmaterialschicht 5 oder weniger beträgt, und die siebte TD-Länge (TDL7) der Trockenelektroden-Aktivmaterialschicht in einem Bereich von etwa 60 % bis etwa 99 % der achten TD-Länge (TDL8) des Elektrodenstromkollektors liegt; und

die Trockenelektroden-Aktivmaterialschicht eine erste MD-Zugfestigkeit (MDS1) und eine erste TD-Zugfestigkeit (TDS1) aufweist, wobei ein Verhältnis (MDS1/TDS1) der ersten MD-Zugfestigkeit (MDS1) zur ersten TD-Zugfestigkeit (TDS1) in einem Bereich von etwa 5 bis etwa 20 liegt;

wobei die gemusterte Anordnung optional eine Kastenmusteranordnung, eine ringförmige Musteranordnung, eine schlangenförmige Musteranordnung oder eine Kombination davon umfasst.

12. Verfahren nach einem der Ansprüche 1 bis 11, wobei der Trockenelektrodenfilm ein selbststehender Film ist, frei von einem Restprozesslösungsmittel ist und ein Trockenelektroden-Aktivmaterial und ein Trockenbindemittel umfasst, wobei das Trockenbindemittel ein fibrilliertes Bindemittel umfasst und ein Bindemittel auf Fluorbasis umfasst,

der Trockenelektrodenfilm weiter ein trockenes leitfähiges Material umfasst und
das trockene leitfähige Material ein auf Kohlenstoff basierendes leitfähiges Material umfasst.

13. Verfahren nach einem der Ansprüche 1 bis 12, wobei:

(i) eine Dicke der mindestens einen Zwischenschicht 30 % oder weniger einer Dicke des Elektrodenstromkollektors beträgt,

die Zwischenschicht ein Bindemittel umfasst und
das Bindemittel mindestens eines aus einem leitfähigen Bindemittel und einem nichtleitfähigen Bindemittel ausgewählt ist und ein Bindemittel auf Fluorbasis umfasst; und/oder

(ii) die mindestens eine Zwischenschicht weiter ein auf Kohlenstoff basierendes leitfähiges Material umfasst.

14. Verfahren nach einem der Ansprüche 1 bis 13, wobei eine Oberfläche des Elektrodenstromkollektors, die an eine Seitenoberfläche der Trockenelektroden-Aktivmaterialschicht angrenzt und nicht von der mindestens einen Zwischenschicht bedeckt ist, frei von Graten und/oder Vertiefungen ist.

15. Verfahren nach einem der Ansprüche 1 bis 14, wobei:

(i) wenn die Trockenelektroden-Aktivmaterialschicht unter Verwendung eines Oberflächen- und Grenzflächenmessanalysesystems (SICAS) gemessen wird, ein Änderungsverhältnis einer vertikalen relativen Bindungskraft ($F_{VR}$) entsprechend einer Tiefe von einem ersten Punkt, der von einer Oberfläche der Trockenelektroden-Aktivmaterialschicht um etwa 5 % einer Gesamtdicke der Trockenelektroden-Aktivmaterialschicht in Richtung des Elektrodenstromkollektors beabstandet ist, zu einem zweiten Punkt, der von einer Oberfläche des Elektrodenstromkollektors um etwa 5 % der Gesamtdicke der Trockenelektrode-Aktivmaterialschicht beabstandet ist, 300 % oder weniger beträgt; und/oder
(ii) wenn die Trockenelektroden-Aktivmaterialschicht unter Verwendung eines Oberflächen- und Grenzflächenmessanalysesystems (SICAS) gemessen wird, ein Verhältnis einer horizontalen Bindungskraft einer ersten horizontalen Bindungskraft ($F_{HA1}$) an einem ersten Punkt, der von einer Oberfläche der Trockenelektroden-Aktivmaterialschicht um etwa 10 % einer Gesamtdicke der Trockenelektroden-Aktivmaterialschicht in Richtung des Elektrodenstromkollektors beabstandet ist, zu einer zweiten horizontalen Bindungskraft ($F_{HA2}$) an einem zweiten Punkt, der von einer Oberfläche des Elektrodenstromkollektors um etwa 10 % der Gesamtdicke der Trockenelektrode-Aktivmaterialschicht beabstandet ist, 50 % oder mehr beträgt.

**Revendications**

1. Procédé de préparation d'une électrode sèche, le procédé comprenant :

l'agencement d'au moins une couche intermédiaire sur au moins une surface d'un collecteur de courant d'électrode pour préparer un premier empilement ;
l'agencement d'un film d'électrode sèche, qui présente une surface plus grande qu'une surface de la au moins une couche intermédiaire, sur le premier empilement pour préparer un second empilement, dans lequel le film d'électrode sèche comprend une première région sur la au moins une couche intermédiaire et une seconde région s'étendant depuis la première région au-delà d'une périphérie extérieure de la au moins une couche intermédiaire ; et
la traction d'au moins une partie de la seconde région du film d'électrode sèche pour séparer la seconde région de la première région et fournir l'électrode sèche,
dans lequel le film d'électrode sèche présente une résistance à la traction anisotrope, et
dans lequel l'électrode sèche comprend une couche de matériau actif d'électrode sèche sur la au moins une couche intermédiaire, et dans l'électrode sèche, la couche de matériau actif d'électrode sèche directement sur le collecteur de courant d'électrode est absente.

2. Procédé selon la revendication 1, dans lequel la seconde région vient en butée contre la première région dans une direction machine (MD) du film d'électrode sèche.

3. Procédé selon la revendication 1 ou la revendication 2, dans lequel une résistance à la traction dans la MD (MDS) du film d'électrode sèche est différente d'une résistance à la traction dans la direction transversale (TD) (TDS) du film d'électrode sèche, et

un rapport (MDS/TDS) de la résistance à la traction dans la MD (MDS) sur la résistance dans la TD (TDS) du film d'électrode sèche est supérieur ou égal à 2 ; facultativement dans lequel un rapport (MDS/TDS) de la résistance à la traction dans la MD (MDS) sur la résistance à la traction dans la TD (TDS) du film d'électrode sèche se situe dans une plage allant d'environ 5 à environ 20.

4. Procédé selon l'une quelconque des revendications 1 à 3, dans lequel la seconde région vient en butée contre la première région le long de la périphérie extérieure de la au moins une couche intermédiaire.

5. Procédé selon l'une quelconque des revendications 1 à 4, dans lequel le film d'électrode sèche comprend en outre une ligne de coupe le long d'au moins une partie d'une limite située entre la première région et la seconde région.

6. Procédé selon la revendication 5, dans lequel :

(i) dans le film d'électrode sèche, la ligne de coupe longe une partie ou la totalité de la périphérie extérieure de la couche intermédiaire ; et/ou
(ii) une longueur de la ligne de coupe est inférieure ou égale à 5 % d'une longueur totale de la limite entre la première région et la seconde région.

7. Procédé selon l'une quelconque des revendications 1 à 6, dans lequel le film d'électrode sèche présente une première zone (S1), et la au moins une couche intermédiaire présente une deuxième zone (S2), dans lequel un rapport (S2/S1) de la deuxième zone (S2) sur la première zone (S1) va d'environ 0,5 à environ 0,99 ; et

le collecteur de courant d'électrode présente une troisième zone (S3), et la au moins une couche intermédiaire présente la deuxième zone (S2), dans lequel un rapport (S2/S3) de la deuxième zone (S2) sur la troisième zone (S3) se situe dans une plage allant d'environ 0,5 à environ 0,99.

8. Procédé selon l'une quelconque des revendications 1 à 7, dans lequel :

l'électrode sèche comprend une pluralité de couches de matériau actif d'électrode sèche qui sont identiques à la couche de matériau actif d'électrode sèche et sont sur la au moins une surface du collecteur de courant d'électrode pour être espacées les unes des autres dans une direction transversale (TD) du collecteur de courant d'électrode ;
chacune parmi la pluralité de couches de matériau actif d'électrode sèche présente une première longueur dans la direction machine (MD) (MDL1) et une première longueur dans la TD (TDL1), et le collecteur de courant d'électrode présente une deuxième longueur dans la MD (MDL2) et une deuxième longueur dans la TD (TDL2) ;
un rapport (MDL1/TDL1) de la première longueur dans la MD (MDL1) de la couche de matériau actif d'électrode sèche sur la première longueur dans la TD (TDL1) de la couche de matériau actif d'électrode sèche est supérieur ou égal à 20 ;
un rapport (TDL1/TDL2) de la première longueur dans la TD (TLD1) de la couche de matériau actif d'électrode sèche sur la deuxième longueur dans la TD (TDL2) du collecteur de courant d'électrode est inférieur ou égal à 0,3 ;
chacune parmi la pluralité de couches de matériau actif d'électrode sèche présente une première résistance à la traction dans la MD (MDS1) et une première résistance à la traction dans la TD (TDS1) ; et
un rapport (MDS1/TDS1) de la première résistance à la traction dans la MD (MDS1) sur la première résistance à la traction dans la TD (TDS1) est supérieur ou égal à 2.

9. Procédé selon l'une quelconque des revendications 1 à 7, dans lequel l'électrode sèche comprend la couche de matériau actif d'électrode sèche sur la au moins une surface du collecteur de courant d'électrode le long d'une direction machine (MD) du collecteur de courant d'électrode,

la couche de matériau actif d'électrode sèche présente une troisième longueur dans la MD (MDL3) et une troisième longueur dans la direction transversale (TD) (TDL3), le collecteur de courant d'électrode présente une quatrième longueur dans la MD (MDL4) et une quatrième longueur dans la TD (TDL4),
les deux extrémités de la couche de matériau actif d'électrode sèche dans une direction transversale (TD) sont espacées, respectivement, des deux extrémités du collecteur de courant d'électrode dans la TD,

la troisième longueur dans la TD (TDL3) de la couche de matériau actif d'électrode sèche se situe dans une plage allant d'environ 60 % à environ 99 % de la quatrième longueur dans la TD (TDL4) du collecteur de courant d'électrode, et

la couche de matériau actif d'électrode sèche présente une première résistance à la traction dans la MD (MDS1) et une première résistance à la traction dans la TD (TDS1), dans lequel un rapport (MDS1/TDS1) de la première résistance à la traction dans la MD (MDS1) sur la première résistance à la traction dans la TD (TDS1) est supérieur ou égal à 2.

10. Procédé selon l'une quelconque des revendications 1 à 7, dans lequel l'électrode sèche comprend la couche de matériau actif d'électrode sèche sur la au moins une surface du collecteur de courant d'électrode dans une direction machine (MD) du collecteur de courant d'électrode,

la couche de matériau actif d'électrode sèche présente une cinquième longueur dans la MD (MDL5) et une cinquième longueur dans la direction transversale (TD) (TDL5), le collecteur de courant d'électrode présente une sixième longueur dans la MD (MDL6) et une sixième longueur dans la TD (TDL6),

la cinquième longueur dans la TD (TDL5) de la couche de matériau actif d'électrode sèche se situe dans une plage allant d'environ 99 % à environ 101 % de la sixième longueur dans la TD (TDL6) du collecteur de courant d'électrode, et

la couche de matériau actif d'électrode sèche présente une première résistance à la traction dans la MD (MDS1) et une première résistance à la traction dans la TD (TDS1), dans lequel un rapport (MDS1/TDS1) de la première résistance à la traction dans la MD (MDS1) sur la première résistance à la traction dans la TD (TDS1) est supérieur ou égal à 2.

11. Procédé selon l'une quelconque des revendications 1 à 7, dans lequel :

l'électrode sèche comprend une pluralité de couches de matériau actif d'électrode sèche qui sont identiques à la couche de matériau actif d'électrode sèche et sont sur la au moins une surface du collecteur de courant d'électrode pour être espacées les unes des autres dans une direction machine (MD) du collecteur de courant d'électrode ;

la pluralité de couches de matériau actif d'électrode sèche présente un agencement à motifs, et chacune parmi la pluralité de couches de matériau actif d'électrode sèche est espacée de chacune des deux extrémités du collecteur de courant d'électrode dans la MD et des deux extrémités du collecteur de courant d'électrode dans une direction transversale (TD) ;

chacune parmi la pluralité de couches de matériau actif d'électrode sèche présente une septième longueur dans la MD (MDL7) et une septième longueur dans la TD (TDL7), et le collecteur de courant d'électrode présente une huitième longueur dans la MD (MDL8) et une huitième longueur dans la TD (TDL8) ;

un rapport (MDL7/TDL7) de la septième longueur dans la MD (MDL7) de la couche de matériau actif d'électrode sèche sur la septième longueur dans la TD (TDL7) de la couche de matériau actif d'électrode sèche est inférieur ou égal à 5, et la septième longueur dans la TD (TDL7) de la couche de matériau actif d'électrode sèche se situe dans une plage allant d'environ 60 % à environ 99 % de la huitième longueur dans la TD (TDL8) du collecteur de courant d'électrode ; et

la couche de matériau actif d'électrode sèche présente une première résistance à la traction dans la MD (MDS1) et une première résistance à la traction dans la TD (TDS1), dans lequel un rapport (MDS1/TDS1) de la première résistance à la traction dans la MD (MDS1) sur la première résistance à la traction dans la TD (TDS1) se situe dans une plage allant d'environ 5 à environ 20 ;

facultativement dans lequel l'agencement à motifs comprend un agencement à motifs en cases, un agencement à motifs annulaires, un agencement à motifs en serpentin ou une combinaison de ceux-ci.

12. Procédé selon l'une quelconque des revendications 1 à 11, dans lequel le film d'électrode sèche est un film autoporteur, est exempt de solvant de traitement résiduel et comprend un matériau actif d'électrode sèche et un liant sec, le liant sec comprend un liant fibrillé et comprend un liant à base de fluor,

le film d'électrode sèche comprend en outre un matériau conducteur sec, et
le matériau conducteur sec comprend un matériau conducteur à base de carbone.

13. Procédé selon l'une quelconque des revendications 1 à 12, dans lequel :

(i) une épaisseur de la au moins une couche intermédiaire est inférieure ou égale à 30 % d'une épaisseur du collecteur de courant d'électrode,

la couche intermédiaire comprend un liant, et
le liant comprend au moins un liant choisi parmi un liant conducteur et un liant non conducteur et comprend un liant à base de fluor ; et/ou

(ii) la au moins une couche intermédiaire comprend en outre un matériau conducteur à base de carbone.

14. Procédé selon l'une quelconque des revendications 1 à 13, dans lequel une surface du collecteur de courant d'électrode adjacente à une surface latérale de la couche de matériau actif d'électrode sèche et non recouverte par la au moins une couche intermédiaire est exempte de bavures et/ou de dépressions.

15. Procédé selon l'une quelconque des revendications 1 à 14, dans lequel :

(i) lorsque la couche de matériau actif d'électrode sèche est mesurée à l'aide d'un système d'analyse de mesure de surface et d'interface (SICAS), un rapport de variation d'une force de liaison relative verticale ($F_{VR}$) en fonction d'une profondeur à partir d'un premier point espacé d'une surface de la couche de matériau actif d'électrode sèche d'environ 5 % d'une épaisseur totale de la couche de matériau actif d'électrode sèche dans une direction du collecteur de courant d'électrode jusqu'à un second point espacé d'une surface du collecteur de courant d'électrode d'environ 5 % de l'épaisseur totale de la couche de matériau actif d'électrode sèche est inférieur ou égal à 300 % ; et/ou
(ii) lorsque la couche de matériau actif d'électrode sèche est mesurée à l'aide d'un système d'analyse de mesure de surface et d'interface (SICAS), un rapport de force de liaison horizontale d'une première force de liaison horizontale ($F_{HA1}$) au niveau d'un premier point espacé d'une surface de la couche de matériau actif d'électrode sèche d'environ 10 % d'une épaisseur totale de la couche de matériau actif d'électrode sèche dans une direction du collecteur de courant d'électrode sur une seconde force de liaison horizontale ($F_{HA2}$) au niveau d'un second point espacé d'une surface du collecteur de courant d'électrode d'environ 10 % de l'épaisseur totale de la couche de matériau actif d'électrode sèche est supérieur ou égal à 50 %.

# FIG. 1A

$$\left.\begin{array}{l} 200 \\ 100 \end{array}\right\} 250$$

# FIG. 1B

$$\left.\begin{array}{l} 200a \\ 100 \\ 200b \end{array}\right\} 250$$

EP 4 439 689 B1

## FIG. 2A

## FIG. 2B

38

# FIG. 3A

# FIG. 3B

# FIG. 4A

# FIG. 4B

# FIG. 4C

# FIG. 4D

## FIG. 4E

## FIG. 4F

# FIG. 5A

MDL1

MDL2

TDL1

TDL2

Y

X

# FIG. 5B

MDL3

MDL4

TDL3 TDL4

Y

X

# FIG. 5C

# FIG. 5D

# FIG. 5E

# FIG. 6A

FIG. 6B

FIG. 6C

# FIG. 6D

# FIG. 6E

FIG. 6F

FIG. 6G

FIG. 6H

FIG. 6I

# FIG. 6J

# FIG. 6K

FIG. 6L

FIG. 6M

FIG. 6N

FIG. 6O

## FIG. 6P

## FIG. 6Q

# FIG. 7

# FIG. 8

# FIG. 9

# FIG. 10

1b

4b
2b
4b
3b

7b

8b

5b